# EUROPÄISCHE PATENTSCHRIFT

(11) **EP 4 126 771 B1**
(45) Veröffentlichungstag und Bekanntmachung des Hinweises auf die Patenterteilung: **15.05.2024**
(21) Anmeldenummer: 21720425.4
(22) Anmeldetag: 19.04.2021
(51) Int. Cl.: C02F 3/28, C02F 103/28

(54) **VERFAHREN ZUR KONTINUIERLICHEN REINIGUNG VON PROZESSWASSER BEI DER ALTPAPIERAUFBEREITUNG MIT STEUERUNG DES GEHALTS AN ANORGANISCHEN FESTSTOFFEN**
METHOD FOR CONTINUOUS CLEANING OF PROCESS WATER IN WASTE PAPER TREATMENT, WITH CONTROL OF THE CONTENT OF INORGANIC SOLIDS
PROCÉDÉ DE NETTOYAGE CONTINU D'EAU DE TRAITEMENT DANS UN TRAITEMENT DE VIEUX PAPIERS, AVEC RÉGULATION DE LA TENEUR EN MATIÈRES SOLIDES INORGANIQUES

(30) Priorität: 20.04.2020 DE 102020002363
(43) Veröffentlichungstag der Anmeldung: 08.02.2023
(73) Patentinhaber: MERI Environmental Solutions GmbH, 81243 München (DE)
(72) Erfinder: TROUBOUNIS, George, 80331 München (DE); LAUBROCK, Henning, 81673 München (DE); MENKE, Lucas, 81545 München (DE); DOMENE FIGUEROLA, Luis, 81673 München (DE)
(74) Vertreter: Henkel & Partner mbB
(86) Internationale Anmeldenummer: PCT/EP2021/060038
(87) Internationale Veröffentlichungsnummer: WO 2021/213963

(56) Entgegenhaltungen:
- EP-B1- 2 558 422
- WO-A1-2010/088993
- WO-A1-2018/021169
- DE-A1-102006 032 489
- DE-A1-102011 077 271
- DE-B3-102005 061 302
- DE-B4-102006 032 489
- KR-B1- 102 023 639

## Beschreibung

Die vorliegende Erfindung betrifft ein Verfahren zur kontinuierlichen Reinigung von in einer Vorrichtung zur Aufbereitung von Altpapier und/oder in der Papiermaschine einer Maschine zur Herstellung von Papier aus Altpapier im Kreislauf geführten Prozesswasser, bei dem zu reinigendes Prozesswasser von einer Einheit der Vorrichtung und/oder der Papiermaschine einem anaeroben Reaktor zugeführt wird, das Prozesswasser in dem anaeroben Reaktor mit anaeroben Mikroorganismen kontaktiert wird, um in dem Prozesswasser enthaltene Verunreinigungen abzubauen, und das gereinigte Prozesswasser aus dem anaeroben Reaktor abgeführt sowie wieder wenigstens einer Einheit der Vorrichtung und/oder der Papiermaschine zurückgeführt wird.

Eine Aufbereitung von in einer Anlage im Kreislauf geführten Prozesswasser ist auf vielen technischen Gebieten notwendig, um eine Anreicherung des Prozesswassers mit Störstoffen zu verhindern. Dies gilt insbesondere auch für das Prozesswasser bei der Papierherstellung, und zwar insbesondere bei der Papierherstellung aus Altpapier. In den letzten Jahrzehnten wird Papier zunehmend aus Altpapier gewonnen, um den Energieverbrauch bei der Papierherstellung zu senken, und insbesondere, um den Verbrauch an natürlichen Ressourcen zu vermindern. Während zur Herstellung einer Tonne Primärfaserpapier rund 2,2 Tonnen Holz benötigt werden, kann der Holzbedarf beim Papierrecycling abhängig von dem Anteil der aus Altpapier stammenden Sekundärfasern, bezogen auf die Gesamtfasermenge in dem Recyclingpapier, drastisch vermindert bzw. auf null gesenkt werden. Zudem wird bei der Produktion von Recyclingpapier im Vergleich zu der Papierherstellung aus Primärfasern nur halb so viel Energie und nur ein Drittel an Frischwasser benötigt. Dennoch ist die Qualität von Recyclingpapier, beispielsweise hinsichtlich der Tintenfestigkeit, des Druckverhaltens, des Weißgrades und der Alterungsbeständigkeit, heute so hoch wie die von Primärfaserpapieren.

Bei der Papierherstellung aus Altpapier wird das Altpapier zunächst mit Wasser vermengt und in einem Pulper bzw. Stoffauflöser unter Rühren und Mischen zerkleinert, um die einzelnen Faserverbunde aufzulösen. Anschließend erfolgt eine Reinigung der Fasern, um nichtfasrige Fremdkörper aus dem Faserbrei zu entfernen, bevor die Fasern optional entfärbt werden und schließlich ggf. nach Zusatz eines geringen Anteils an Primärfasern auf einer Papiermaschine zu Papier verarbeitet werden. Eine entsprechende Maschine zur Herstellung von Papier aus Altpapier umfasst mithin eine Vorrichtung zur Aufbereitung von Altpapier und eine Papiermaschine, wobei die Altpapieraufbereitungsvorrichtung eine Altpapierauflöseeinheit bzw. einen Pulper, in der dem Altpapier Prozesswasser zum Auflösen und Zerkleinern der Fasern zugeführt wird, eine Sortiervorrichtung zur Entfernung von Verschmutzungen und eine Entwässerungseinheit zur Entfernung von Prozesswasser aufweist. Es ist auch bekannt, in der Anlage zwei oder mehr Altpapieraufbereitungsvorrichtungen bzw. Stufen, sogenannte Loops, vorzusehen, um die Qualität der aus dem Altpapier aufbereiteten Fasern zu erhöhen. Jeder Loop der Altpapieraufbereitungsvorrichtung und die Papiermaschine umfassen dabei vorzugsweise eine eigene Prozesswasseraufbereitungseinheit, wobei die einzelnen Prozesswasseraufbereitungseinheiten durch eine zwischen den einzelnen Loops vorgesehene Entwässerungseinrichtung voneinander entkoppelt sein können. Um das Prozesswasser im Kreislauf führen zu können und so den Frischwasserzusatz minimieren zu können, muss das Prozesswasser in einem erforderlichen Ausmaß gereinigt werden.

Zur Prozesswasserreinigung sind eine Vielzahl von mechanischen, chemischen sowie biologischen Verfahren und entsprechende Reaktoren bekannt. Bei der biologischen Prozesswasserreinigung wird das zu reinigende Prozesswasser mit aeroben oder anaeroben Mikroorganismen kontaktiert, welche die in dem Prozesswasser enthaltenen organischen Verunreinigungen im Falle von aeroben Mikroorganismen überwiegend zu Kohlendioxid und Wasser und im Falle von anaeroben Mikroorganismen vorwiegend zu Kohlendioxid und Methan abbauen. Dabei werden die biologischen Prozesswasserreinigungsverfahren in jüngster Zeit zunehmend mit anaeroben Mikroorganismen durchgeführt, weil bei der anaeroben Prozesswasserreinigung zum einen nicht unter hohem Energieaufwand Sauerstoff in den Bioreaktor eingeführt werden muss und zum anderen bei der Reinigung energiereiches Biogas erzeugt wird, welches nachfolgend zur Energiegewinnung eingesetzt werden kann. Je nach der Art und Form der eingesetzten Biomasse werden die Reaktoren für die anaerobe Prozesswasserreinigung in Kontaktschlammreaktoren, UASB-Reaktoren, EGSB-Reaktoren, Festbettreaktoren und Fließbettreaktoren unterteilt. Während die Mikroorganismen bei Festbettreaktoren an ortsfesten Trägermaterialen und die Mikroorganismen bei Fließbettreaktoren auf frei beweglichen, kleinem Trägermaterial anhaften, werden die Mikroorganismen bei den UASB- und EGSB-Reaktoren in Form so genannter Pellets eingesetzt. Derartige Verfahren und entsprechende Reaktoren sind beispielsweise in der EP 0 170 332 A1, in der EP 1 071 636 B1 und in der EP 0 539 430 B1 beschrieben.

Aus der Entgegenhaltung DE 10 2005 061 302 B3 ist ein Verfahren zur Herstellung von Papier aus Altpapier mit einem Altpapieraufbereitungsschritt in einer Papieraufbereitungsvorrichtung bekannt, in dem Altpapier aufbereitet und einer Papiermaschine zugeführt wird, wobei (a) der Altpapieraufbereitungsschritt ein oder mehrstufig ist, wobei das Prozesswasser in jeweils eigener Prozesswasseraufbereitungseinheit getrennt aufbereitet wird, (b) das Prozesswasser der Papiermaschine in einem eigenen Kreislauf mit eigener Prozesswasseraufbereitungseinheit aufbereitet wird; (c) jede der vorgenannten Prozesswasseraufbereitungsschritte einen Stoffrückgewinnungsschritt und/oder Entstoffungsschritt in einer Reinigungs- und/oder Stoffrückgewinnungseinheit umfasst; (d) mindestens eine der Prozesswasseraufbereitungsschritte einen mit anaeroben Mikroorganismen versetzten Anaerob-Aufbereitungsschritt in einem Anaerob-Reaktor zur anaeroben Wasseraufbereitung sowie einen darauffolgende Entkalkungsschritt in einer Kalkeliminationseinheit umfasst.

Bei der anaeroben Prozesswasserreinigung ist es besonders wichtig, sicherzustellen, dass der Gehalt an anorganischen Feststoffen und insbesondere der von Kalk in dem in dem anaeroben Reaktor enthaltenen Prozesswasser nicht zu hoch wird. Dies ist insbesondere bei der Reinigung von Prozesswasser in einer Maschine zur Herstellung von Papier aus Altpapier eine große Herausforderung, weil Altpapier in seiner Beschichtung größere Mengen Kalk enthält, welche somit zwangsläufig in das Prozesswasser überführt werden. Eine entsprechende Verhinderung eines zu hohen Gehalts an anorganischen Feststoffen und insbesondere an Kalk in dem in dem anaeroben Reaktor enthaltenen Prozesswasser ist deshalb wichtig, weil ein hoher Gehalt von anorganischen Feststoffen und insbesondere von Kalk den Betrieb eines anaeroben Reaktors, wie beispielsweise insbesondere UASB-Reaktors, stört. Für die Funktion der in anaeroben Reaktoren enthaltenen Mikroorganismenpellets ist es wichtig, dass diese ein definiertes spezifisches Gewicht aufweisen, um während des Abbaus der organischen Verbindungen aus dem Prozesswasser durch das dabei gebildete Biogas, welches an den Mikroorganismenpellets anhaftet, in dem Reaktor nach oben steigen zu können, um an einem Gasabscheider das gebildete Biogas abzutrennen. Nach Abtrennung des Biogases darf das spezifische Gewicht insbesondere nicht so groß werden, dass die Mikroorganismenpellets bis auf den Boden des Reaktors absinken, da diese sonst nicht mehr an dem Reinigungsprozess teilnehmen können. Aufgrund ihrer Struktur und Größe wirken Mikroorganismenpellets jedoch als Kristallisationskeime für Ablagerungen von anorganischen Feststoffen und insbesondere von Kalk, so dass sich bei einem gewissen Gehalt von anorganischen Feststoffen und insbesondere von Kalk auf den Mikroorganismenpellets anorganische Feststoffe und insbesondere Kalk abscheiden, wobei diese Ablagerungen zu einer unkalkulierbaren Verschiebung des spezifischen Gewichts der Pellets führen, weswegen diese ihre Funktion nicht mehr wahrnehmen können. Auch die Stoffwechseltätigkeit der anaeroben Mikroorganismen bewirkt eine Verschiebung des Kalk-Kohlensäure-Gleichgewichts durch die Erzeugung von unter anderem Hydrogencarbonat (HCO₃⁻), was eine Kalkausfällung auf den Mikroorganismenpellets weiter begünstigt. Um trotz der Kalkausfällung auf den Mikroorganismenpellets deren Funktion sicherzustellen, müssten die Rezirkulationsmengen in dem anaeroben Reaktor vergrößert werden, um die Pellets trotz größerem spezifischen Gewicht in dem Reaktor in Schwebe zu halten. Der Rezirkulationsmenge sind aber einerseits durch die hydraulische Kapazität der Separatoren und andererseits durch die Notwendigkeit, die Strömung in dem Reaktor laminar zu halten, Grenzen gesetzt. Höhere Rezirkulationsmengen bewirken außerdem durch die Entstehung von Druckgradienten saug- und druckseitig der Pumpe in der Rezirkulationsleitung das Entweichen von Kohlendioxid und dadurch eine weitere Verschiebung des Kalk-Kohlensäure-Gleichgewichts in Richtung einer Kalkausfällung.

Aufgabe der vorliegenden Erfindung ist es daher, ein Verfahren zur kontinuierlichen Reinigung von in einer Vorrichtung zur Aufbereitung von Altpapier und/oder in einer Papiermaschine einer Maschine zur Herstellung von Papier aus Altpapier im Kreislauf geführten Prozesswasser unter Nutzung eines anaeroben Reaktors sowie eine entsprechende Vorrichtung zur Aufbereitung von Altpapier und/oder eine Papiermaschine einer Maschine zur Herstellung von Papier aus Altpapier bereitzustellen, bei dem das Prozesswasser effizient gereinigt wird und bei dem auf einfache Weise eine Störung des Betriebs des anaeroben Reaktors zuverlässig vermieden wird.

Erfindungsgemäß wird diese Aufgabe gelöst durch ein Verfahren zur kontinuierlichen Reinigung von in einer Vorrichtung zur Aufbereitung von Altpapier und/oder in der Papiermaschine einer Maschine zur Herstellung von Papier aus Altpapier im Kreislauf geführten Prozesswasser, bei dem zu reinigendes Prozesswasser aus wenigstens einer Einheit der Vorrichtung und/oder der Papiermaschine einer Prozesswasseraufbereitungseinheit mit einem ein oder mehrere Gasabscheider umfassenden anaeroben Reaktor zugeführt wird, das Prozesswasser in dem anaeroben Reaktor mit anaeroben Mikroorganismen kontaktiert wird, um in dem Prozesswasser enthaltene Verunreinigungen abzubauen, und das gereinigte Prozesswasser aus dem anaeroben Reaktor abgeführt sowie wieder wenigstens einer Einheit der Vorrichtung und/oder der Papiermaschine zurückgeführt wird, wobei wenigstens eine Einheit ausgewählt ist aus ein oder mehreren von Stofflöser, Sortiervorrichtung, Entwässerungseinheit, Oxidations-/Reduktionseinheit, Zentrifugalsortierer, Feinsortiervorrichtung, Papiermaschinen-Formpartie, Papiermaschinen-Presspartie, Rejektbehandlungseinheit, Faserrückgewinnungseinheit und Trockenpartie, wobei bei dem Verfahren kontinuierlich oder diskontinuierlich der Gehalt an anorganischen Feststoffen in dem im anaeroben Reaktor enthaltenen Prozesswasser gemessen wird, und, wenn der Gehalt an anorganischen Feststoffen in dem im anaeroben Reaktor enthaltenen Prozesswasser einen voreingestellten Grenzwert überschreitet, Prozesswasser mit darin gelösten und dispergierten Feststoffen aus dem anaeroben Reaktor kontinuierlich solange einer Fest-/Flüssig-Trennvorrichtung zur Trennung in eine an anorganischen Feststoffen abgereicherte Fraktion und eine an anorganischen Feststoffen angereicherte Fraktion zugeführt wird, wobei die an anorganischen Feststoffen abgereicherte Fraktion zumindest teilweise in den anaeroben Reaktor zurückgeführt wird und die an anorganischen Feststoffen angereicherte Fraktion aus der Vorrichtung und/oder Papiermaschine abgeführt wird, bis der Gehalt an anorganischen Feststoffen in dem im anaeroben Reaktor enthaltenen Prozesswasser weniger als der voreingestellte Grenzwert beträgt.

Indem erfindungsgemäß der Gehalt an anorganischen Feststoffen in dem im anaeroben Reaktor enthaltenen Prozesswasser mit darin gelösten und dispergierten Feststoffen gemessen wird, und, wenn der Gehalt an anorganischen Feststoffen in dem im anaeroben Reaktor enthaltenen Prozesswasser mit darin gelösten und dispergierten Feststoffen einen voreingestellten Grenzwert überschreitet, Prozesswasser mit darin gelösten und dispergierten Feststoffen aus dem anaeroben Reaktor kontinuierlich solange einer Fest-/Flüssig-Trennvorrichtung zur Trennung in eine an anorganischen Feststoffen abgereicherte Fraktion und eine an anorganischen Feststoffen angereicherte Fraktion zugeführt wird, wobei die an anorganischen Feststoffen abgereicherte Fraktion zumindest teilweise in den anaeroben Reaktor zurückgeführt wird und die an anorganischen Feststoffen angereicherte Fraktion aus der Vorrichtung und/oder Papiermaschine abgeführt wird, bis der Gehalt an anorganischen Feststoffen in dem im anaeroben Reaktor enthaltenen Prozesswasser weniger als der voreingestellte Grenzwert beträgt, wird auf verfahrenstechnisch einfache und besonders zuverlässige Weise sichergestellt, dass eine Störung des Betriebs des anaeroben Reaktors durch Feststoff- und insbesondere Kalkablagerungen auf den anaeroben Mikroorganismen bzw. anaeroben Mikroorganismenpellets vermieden wird. Dadurch wird eine besonders hohe Effizienz der anaeroben Reinigung auch über eine sehr lange Betriebsdauer sichergestellt, ohne dass Wartungsarbeiten, wie das manuelle Entfernen von Schlamm und Feststoffen, aus dem anaeroben Reaktor notwendig sind, oder aufwendige zusätzliche Reinigungsstufen, wie eine Druckentspannungsflotation zur Entkalkung des Prozesswassers, notwendig sind. Aus diesen Gründen erlaubt das erfindungsgemäße Verfahren eine effiziente und zuverlässige kontinuierliche Reinigung von in einer Vorrichtung zur Aufbereitung von Altpapier und/oder in der Papiermaschine einer Maschine zur Herstellung von Papier aus Altpapier im Kreislauf geführten Prozesswasser.

Erfindungsgemäß wird bei dem Verfahren zur Reinigung von in der Vorrichtung und/oder Papiermaschine im Kreislauf geführten Prozesswasser, wenn der Gehalt an anorganischen Feststoffen in dem im anaeroben Reaktor enthaltenen Prozesswasser den voreingestellten Grenzwert überschreitet, Prozesswasser aus dem anaeroben Reaktor kontinuierlich solange der Fest-/Flüssig-Trennvorrichtung zugeführt, bis der Gehalt an anorganischen Feststoffen in dem im anaeroben Reaktor enthaltenen Prozesswasser weniger als der voreingestellte Grenzwert beträgt. Unter "im anaeroben Reaktor enthaltenen Prozesswasser" wird dabei die in dem anaeroben Reaktor enthaltende Mischung verstanden, das heißt das darin enthaltende Prozesswasser inklusive aller darin gelösten und dispergierten Substanzen, wie organischen Verbindungen, anorganischen Verbindungen und Mikroorganismen(pellets).

Grundsätzlich ist die vorliegende Erfindung bezüglich der Art der Messung des Gehalts an anorganischen Feststoffen in dem im anaeroben Reaktor enthaltenen Prozesswasser nicht besonders limitiert. Der Gehalt an anorganischen Feststoffen kann insbesondere bestimmt werden, wie die in der DIN 38409-1, Januar 1987 *"Deutsche Einheitsverfahren zur Wasser-, Abwasser- und Schlammuntersuchung; Summarische Wirkungs- und Stoffgrößen (Gruppe H); Bestimmung des Gesamttrockenrückstandes, des Filtrattrockenrückstandes und des Glührückstandes (H 1)*" sowie in der DIN 38409-2, März 1987 *"Deutsche Einheitsverfahren zur Wasser-, Abwasser- und Schlammuntersuchung; Summarische Wirkungs- und Stoffkenngrößen (Gruppe H); Bestimmung der abfiltrierbaren Stoffe und des Glührückstandes (H 2)"* beschrieben ist.

Eine einfache und dennoch zuverlässige Messung des Gehalts an anorganischen Feststoffen in dem im anaeroben Reaktor enthaltenen Prozesswasser lässt sich vorzugsweise erreichen, indem der Gehalt an anorganischen Feststoffen in dem im anaeroben Reaktor enthaltenen Prozesswasser gemessen wird, indem eine Probe des in dem anaeroben Reaktor enthaltenen Prozesswassers entnommen wird, diese Probe filtriert wird, der bei der Filtration erhaltene Rückstand in einem Ofen bei 105°C getrocknet wird, bis kein Masseverlust mehr auftritt, um einen getrockneten Feststoffrückstand zu erhalten, die Masse des getrockneten Feststoffrückstands gemessen wird, der getrocknete Feststoffrückstand in einem Ofen bei 550°C wärmebehandelt wird, bis kein Masseverlust mehr auftritt, um einen wärmebehandelten Feststoffrückstand zu erhalten, und die Masse des wärmebehandelten Feststoffrückstandes gemessen wird, wobei der Gehalt an anorganischen Feststoffen in dem im anaeroben Reaktor enthaltenen Prozesswasser zu dem Zeitpunkt der Probenentnahme der Quotient von der Masse des wärmebehandelten Feststoffrückstandes und der Masse des getrockneten Feststoffrückstands ist. Die Filtration kann insbesondere mit einem aschefreien Filter mit einer Porengröße von 15 bis 30 µm und bevorzugt mit einer Porengröße von 20 bis 25 µm durchgeführt werden. Geeignete Filter sind beispielsweiseaschefreie Schwarz- und Weißbandpapierfilter. Bei der Trocknung bei 105°C wird die Feuchtigkeit aus dem bei der Filtration erhaltenen Rückstand entfernt, so dass trockener Feststoffrückstand erhalten wird, der sowohl organische Feststoffe als auch anorganische Feststoffe enthält. Bei der anschließenden Wärmebehandlung bei 550°C werden die in dem trockenen Feststoffrückstand enthaltenen organischen Feststoffe zersetzt und in Form von Gasen entfernt, so dass der wärmebehandelte Feststoffrückstand aus anorganischen Feststoffen und vornehmlich Kalk besteht.

Die Messung des Gehalts an anorganischen Feststoffen in dem im anaeroben Reaktor enthaltenen Prozesswasser kann auch kontinuierlich erfolgen, indem kontinuierlich ein Messstrom von Prozesswasser aus dem anaeroben Reaktor entnommen und filtriert wird, wobei das Filtrat kontinuierlich oder in vorgegebenen Abständen automatisch durch einen kontinuierlichen Ofen, wie beispielsweise einem Durchlaufofen, geführt wird, in dem dieses Filtrat beispielsweise bei 105°C getrocknet wird, bis kein Masseverlust mehr auftritt, um einen getrockneten Feststoffrückstand zu erhalten, von dem in einer dem kontinuierlichen Ofen nachgeschalteten kontinuierlichen Waage die Masse gemessen wird. Dieser getrocknete Feststoffrückstand wird dann in einem kontinuierlichen Ofen bei 550°C wärmebehandelt, wobei die Länge des kontinuierlichen Ofens, d.h. dessen Durchlaufzeit, so eingestellt ist, dass der getrocknete Feststoffrückstand solange erwärmt wird, bis kein Masseverlust mehr auftritt, um einen wärmebehandelten Feststoffrückstand zu erhalten, dessen Masse dann in einer nachgeschalteten kontinuierlichen Waage gemessen wird. Der anorganische Feststoffgehalt wird dann von einer Steuereinrichtung, wie zuvor beschrieben, bestimmt und anhand der kontinuierlich bestimmten Werte das Verfahren gesteuert.

Um die besonders aktiven, nicht von Ablagerungen auf den Reaktorboden sedimentierten Mikroorganismen(pellets), welche während des anaeroben Verfahrens vornehmlich in dem, bezogen auf die Höhe des anaeroben Reaktors, mittleren Reaktorbereich vorliegen, durch die Entnahme der Probe möglichst wenig zu beeinträchtigen, wird es in Weiterbildung des Erfindungsgedankens vorgeschlagen, die Probe des in dem anaeroben Reaktor enthaltenen Prozesswassers aus dem, bezogen auf die Höhe des anaeroben Reaktors, unteren Bereich des anaeroben Reaktors zu entnehmen. Vorzugsweise erfolgt die Entnahme der Probe aus den unteren 20%, besonders bevorzugt aus den unteren 10% und besonders bevorzugt aus den unteren 5% des anaeroben Reaktors bzw. von dem auf dem Reaktorboden sedimentierten Feststoff.

Vorzugsweise liegen die Mikroorganismen in dem anaeroben Reaktor als Mikroorganismenpellets vor.

Aus den gleichen Gründen ist es erfindungsgemäß bevorzugt, das der Fest-/Flüssig-Trennvorrichtung - bei Überschreitung des voreingestellten Grenzwertes - kontinuierlich zugeführte Prozesswasser aus dem, bezogen auf die Höhe des anaeroben Reaktors, unteren Bereich des anaeroben Reaktors zu entnehmen. Auch bei dieser Ausführungsform ist es bevorzugt, das Prozesswasser aus dem, bezogen auf die Höhe des anaeroben Reaktors, unteren 20%, besonders bevorzugt unteren 10% und besonders bevorzugt unteren 5% des anaeroben Reaktors zu entnehmen.

Um ein Absetzen von in dem Prozesswasser dispergierten Feststoffen auf dem Reaktorboden zu ermöglichen, ohne das Sediment durch den Zulauf und die in dem anaeroben Reaktor eingestellten Strömungsverhältnisse unnötig aufzuwirbeln, ist es gemäß einer weiteren bevorzugten Ausführungsform der vorliegenden Erfindung vorgesehen, dass der untere Bereich des anaeroben Reaktors, im Querschnitt gesehen, zumindest teilweise konisch ausgebildet ist. Aufgrund der dadurch im unteren Reaktorbereich ausgebildeten Schrägen der Reaktorwand des Reaktorbodens wird ein Absinken der Feststoffe auf den untersten Bereich des Reaktorboden begünstigt, so dass ein Aufwirbeln durch den Zulauf an Prozesswasser und durch die Strömungsverhältnisse in dem anaeroben Reaktor minimiert wird.

Gute Ergebnisse werden insbesondere erhalten, wenn der untere Bereich des anaeroben Reaktors als Konus ausgebildet ist, wobei sich der Konus bevorzugt über 1 bis 50%, besonders bevorzugt über 1 bis 20% und besonders bevorzugt über 1 bis 10% der Höhe des anaeroben Reaktors erstreckt.

Anstelle eines Konus können in dem unteren Bereich des anaeroben Reaktors auch mehrere Konusse vorgesehen sein. Vorzugsweise ist bei dieser alternativen Ausführungsform der untere Bereich des anaeroben Reaktors, im Querschnitt gesehen, zickzackförmig ausgestaltet, wobei sich der zickzackförmige Bereich bevorzugt über 1 bis 50%, besonders bevorzugt über 1 bis 20% und besonders bevorzugt über 1 bis 10% der Höhe des anaeroben Reaktors erstreckt. Bei dieser Ausführungsform umfasst der Reaktorboden mithin mehrere benachbarte konische Bereiche, so dass die Gesamtfläche der Schrägen der Reaktorwand des Reaktorbodens größer ist als bei der zuvor beschriebenen Ausführungsform, bei welcher der Reaktorboden als ein Konus ausgebildet ist.

Vorzugsweise wird der Grenzwert für den Gehalt an anorganischen Feststoffen in dem im anaeroben Reaktor enthaltenen Prozesswasser auf einen Wert zwischen 30 und 45 Gew.-%, bevorzugt zwischen 34 und 40 Gew.-%, besonders bevorzugt zwischen 36 und 38 Gew.-% und höchst bevorzugt auf etwa 37 Gew.-% voreingestellt.

Gemäß einer weiteren besonders bevorzugten Ausführungsform der vorliegenden Erfindung ist es vorgesehen, Prozesswasser aus dem anaeroben Reaktor kontinuierlich solange einer Fest-/Flüssig-Trennvorrichtung zuzuführen und die an anorganischen Feststoffen abgereicherte Fraktion zumindest teilweise in den anaeroben Reaktor zurückzuführen, bis der Gehalt an anorganischen Feststoffen in dem im anaeroben Reaktor enthaltenen Prozesswasser mindestens 1% weniger, bevorzugt mindestens 2% weniger, besonders bevorzugt mindestens 5% weniger und höchst bevorzugt mindestens 10% weniger als der voreingestellte Grenzwert beträgt. Danach wird die Zufuhr von Prozesswasser aus dem anaeroben Reaktor zu der Fest-/Flüssig-Trennvorrichtung beendet, bis der Grenzwert erneut überschritten wird.

In Weiterbildung des Erfindungsgedankens wird es vorgeschlagen, das Prozesswasser in der Fest-/Flüssig-Trennvorrichtung so aufzutrennen, dass, bezogen auf den Volumenstrom des der Fest-/Flüssig-Trennvorrichtung aus dem anaeroben Reaktor zugeführten Prozesswassers, der Anteil der an anorganischen Feststoffen abgereicherten Fraktion wenigstens 70 Vol.-%, bevorzugt wenigstens 80 Vol.-% und besonders bevorzugt wenigstens 90 Vol.-% und der Anteil der an anorganischen Feststoffen angereicherten Fraktion den Rest auf 100 Vol.-% beträgt. Dadurch wird erreicht, dass ein maximaler Anteil des in Bezug auf die Feststoffe abgereicherten Prozesswassers wieder in den anaeroben Reaktor zurückgeführt wird bzw. zurückgeführt werden kann. Dies ist wichtig, weil das Prozesswasser, wie vorstehend beschrieben, bevorzugt aus dem unteren Bereich des anaeroben Reaktors entnommen wurde und daher noch nicht ausreichend in Bezug auf die darin gelösten organischen Verunreinigungen gereinigt wurde. Hingegen wird das ausreichend gereinigte Prozesswasser aus dem oberen Bereich des anaeroben Reaktors abgeführt.

Aus den vorstehenden Gründen ist es auch bevorzugt, dass das Prozesswasser in der Fest-/Flüssig-Trennvorrichtung so aufgetrennt wird, dass der Gehalt an anorganischen Feststoffen in der an anorganischen Feststoffen angereicherten Fraktion um wenigstens 25%, bevorzugt um wenigstens 50%, besonders bevorzugt um wenigstens 75% und höchst bevorzugt um wenigstens 100% höher ist als der Gehalt an anorganischen Feststoffen in der an anorganischen Feststoffen abgereicherten Fraktion.

Gute Ergebnisse werden insbesondere erhalten, wenn das Prozesswasser in der Fest-/Flüssig-Trennvorrichtung so aufgetrennt wird, dass der Gehalt an anorganischen Feststoffen in der an anorganischen Feststoffen angereicherten Fraktion 1,5 bis 5,0 kg/l, bevorzugt 2,0 bis 3,0 kg/l, besonders bevorzugt 2,3 bis 2,7 kg/l und höchst bevorzugt etwa 2,5 kg/l, sowie der Gehalt an anorganischen Feststoffen in der an anorganischen Feststoffen abgereicherten Fraktion 0,1 bis 1,5 kg/l, bevorzugt 0,5 bis 1,5 kg/l und besonders bevorzugt 0,5 bis 1,0 kg/l beträgt.

Die Steuerung bzw. Regelung der vorgenannten Parameter erfolgt automatisch. Bei der automatischen Steuerung bzw. Regelung der vorgenannten Parameter werden vorzugsweise die an den Proben gemessenen Gehalte an anorganischen Feststoffen in dem im anaeroben Reaktor enthaltenen Prozesswasser einer elektronischen Steuereinrichtung übermittelt, welche automatisch die kontinuierliche Abführung von Prozesswasser aus dem anaeroben Reaktor und die Zuführung desselben in die Fest-/Flüssig-Trennvorrichtung startet, wenn der voreingestellte Grenzwert für den anorganischen Feststoffgehalt in dem im anaeroben Reaktor enthaltenen Prozesswasser überschritten wird, und automatisch die kontinuierliche Abführung von Prozesswasser aus dem anaeroben Reaktor und die Zuführung desselben in die Fest-/Flüssig-Trennvorrichtung beendet, wenn ein bei oder unterhalb des Grenzwertes liegender voreingestellter Schwellenwert für den anorganischen Feststoffgehalt in dem im anaeroben Reaktor enthaltenen Prozesswasser unterschritten wird.

Um nicht durch die Rückführung der an anorganischen Feststoffen abgereicherten Fraktion in den anaeroben Reaktor für die anaeroben Mikroorganismen schädliche Luft einzuführen, wird es in Weiterbildung des Erfindungsgedankens vorgeschlagen, dass die Fest-/Flüssig-Trennvorrichtung zumindest so ausgestaltet ist, dass das der Fest-/Flüssig-Trennvorrichtung aus dem anaeroben Reaktor zugeführte Prozesswasser sowie die an anorganischen Feststoffen abgereicherte Fraktion in der Fest-/Flüssig-Trennvorrichtung nicht mit Luft in Berührung kommen. Auch die den anaeroben Reaktor sowie die Fest-/Flüssig-Trennvorrichtung verbindende Leitung zur Abführung des Prozesswassers aus dem anaeroben Reaktor und Zuführung desselben in die Fest-/Flüssig-Trennvorrichtung sowie die die Fest-/Flüssig-Trennvorrichtung und den anaeroben Reaktor verbindende Rückfuhrleitung zur Rückführung der an anorganischen Feststoffen abgereicherten Fraktion in den anaeroben Reaktor sind aus den vorgenannten Gründen bevorzugt luftdicht ausgestaltet.

Um eine effiziente Trennung des der Fest-/Flüssig-Trennvorrichtung kontinuierlich aus dem anaeroben Reaktor zugeführten Prozesswassers in die an anorganischen Feststoffen abgereicherte Fraktion sowie die an anorganischen Feststoffen angereicherte Fraktion zu erreichen, ist es gemäß einer weiteren besonders bevorzugten Ausführungsform der vorliegenden Erfindung vorgesehen, dass die Trennung in einer Fest-/Flüssig-Trennvorrichtung durchgeführt wird, welche ein oder mehrere Zentrifugalabscheider umfasst.

Gute Ergebnisse werden insbesondere erreicht, wenn die Trennung des der Fest-/Flüssig-Trennvorrichtung kontinuierlich aus dem anaeroben Reaktor zugeführten Prozesswassers in die an anorganischen Feststoffen abgereicherte Fraktion sowie die an anorganischen Feststoffen angereicherte Fraktion in einer Fest-/Flüssig-Trennvorrichtung durchgeführt wird, welche ein oder mehrere Zyklone umfasst. In einem Zyklon erfolgt die Abtrennung der beiden Fraktionen dadurch, dass das zugeführte Prozesswasser mit den darin gelösten und dispergierten Feststoffen in dem Zyklon in eine Drehbewegung versetzt wird, infolge dessen die massereichere Fraktion aufgrund der Zentrifugalkraft an die Zykloninnenwand geschleudert wird, von der diese in dem Zyklon nach unten absinkt und dort abgeführt werden kann, währenddessen die masseärmere Fraktion im Inneren des Zyklonen verbleibt, ohne die Zykloninnenwand zu berühren, und welche daher aufgrund der in dem Zyklon herrschenden Strömungsverhältnisse oben aus dem Zyklon abgeführt werden kann.

Ferner ist es in einer weiteren bevorzugten Ausführungsform vorgesehen, dass der untere Bereich des Zyklons eine Schwerteilkammer aufweist. Diese Schwerteilkammer ist deren oberen Bereich mit dem unteren Ausgang des Zyklons über einen ersten automatischen Auf-/Zu-Schieber A verbunden. Der untere Bereich dieser Schwerteilkammer hat einen zweiten automatischen Auf-/Zu-Schieber B für die Abgabe der mit Asche angereicherten Fraktion. Während des Betriebes ist erste Schieber A offen und der zweite Schieber B zu, so dass sich die aschereiche Fraktion in der Schwerteilkammer anreichert. In bestimmten Zeitintervallen schließt der erste Schieber A und öffnet sich der zweite Schieber B, so dass die Schwerteilkammer entleert wird. In der Schwerteilkammer kann auch eine Spülvorrichtung vorgesehen sein, welche die Kammer nach der Entleerung automatisch spült, bevor der zweite Schieber B wieder geschlossen wird und sich der Schieber A öffnet, um den Zyklus zu wiederholen. Die diskontinuierliche Entleerung der Kammer hilft dabei, die Rejektmenge zu reduzieren.

Die Zuführung des Prozesswassers in die Fest-/Flüssig-Trennvorrichtung kann durch eine Pumpe erfolgen. Um die Betriebskosten des erfindungsgemäßen Verfahrens so gering wie möglich zu halten, ist es erfindungsgemäß besonders bevorzugt, die Fest-/Flüssig-Trennvorrichtung so anzuordnen und die Füllhöhe in dem anaeroben Reaktor so einzustellen, dass das Prozesswasser zumindest zu einem erheblichen Anteil und ganz besonders bevorzugt allein durch die Gravitationskraft aus dem anaeroben Reaktor der Fest-/Flüssig-Trennvorrichtung zugeführt wird. Dies kann beispielsweise dadurch erreicht werden, dass der Höhenunterschied zwischen dem Flüssigkeitsspiegel in dem anaeroben Reaktor und der Stelle der Zuführung des Prozesswassers in die Fest-/Flüssig-Trennvorrichtung so groß ist, dass die Differenz zwischen dem hydrostatischen Druck in dem anaeroben Reaktor und in der Fest-/Flüssig-Trennvorrichtung ausreichend groß ist. Im Hinblick darauf ist es bevorzugt, dass die vorgenannte Druckdifferenz mindestens 0,2 MPa entsprechend 2 bar und höchst bevorzugt mindestens 0,3 MPa entsprechend 3 bar beträgt.

In Weiterbildung des Erfindungsgedankens wird es vorgeschlagen, die an anorganischen Feststoffen abgereicherte Fraktion vollständig in den anaeroben Reaktor zurückzuführen.

Die Rückführung der an anorganischen Feststoffen abgereicherten Fraktion in den anaeroben Reaktor kann konstruktiv einfach durch Einspeisung der an anorganischen Feststoffen abgereicherten Fraktion in den Zulauf zu dem anaeroben Reaktor erreicht werden. Daher ist es bevorzugt, dass die an anorganischen Feststoffen abgereicherte Fraktion zumindest teilweise und ganz besonders bevorzugt vollständig über den Zulauf in den anaeroben Reaktor zurückgeführt wird.

Aufgrund der Effizienz der Feststoff- und insbesondere Kalkentfernung aus dem in dem anaeroben Reaktor befindlichen Prozesswasser eignet sich das erfindungsgemäße Verfahren hervorragend zum Reinigen von Prozesswasser bei der Altpapierherstellung, bei der sich aufgrund des in dem Altpapier enthaltenen Kalks ohne effiziente Kalkentfernung in dem Prozesswasser erhebliche Mengen an Kalk ansammeln würden. Erfindungsgemäß wird zu reinigendes Prozesswasser aus wenigstens einer Einheit der Vorrichtung und/oder der Papiermaschine der Prozesswasseraufbereitungseinheit und darin dem in der Prozesswasseraufbereitungseinheit enthaltenen anaeroben Reaktor zugeführt und in dem anaeroben Reaktor gereinigtes Prozesswasser aus dem anaeroben Reaktor abgeführt sowie aus der Prozesswasseraufbereitungseinheit wieder wenigstens einer Einheit der Vorrichtung und/oder der Papiermaschine zurückgeführt, wobei wenigstens eine Einheit ausgewählt ist aus ein oder mehreren von Stofflöser, Sortiervorrichtung, Entwässerungseinheit, Oxidations-/Reduktionseinheit, Zentrifugalsortierer, Feinsortiervorrichtung, Papiermaschinen-Formpartie, Papiermaschinen-Presspartie, Rejektbehandlungseinheit, Faserrückgewinnungseinheit und Trockenpartie. Dies umfasst, dass das Prozesswasser aus einer Einheit abgezogen und der Prozesswasseraufbereitungseinheit zugeführt wird und das gereinigte Prozesswasser aus der Prozesswasseraufbereitungseinheit in dieselbe Einheit zurückgeführt wird. Alternativ dazu ist es jedoch auch möglich, dass das Prozesswasser aus einer ersten Einheit abgezogen und der Prozesswasseraufbereitungseinheit zugeführt wird und das gereinigte Prozesswasser aus der Prozesswasseraufbereitungseinheit in eine zweite, von der ersten Einheit verschiedene Einheit zurückgeführt wird. Beispielsweise kann das Prozesswasser aus der Sortiervorrichtung der Vorrichtung abgeführt und in die Prozesswasseraufbereitungseinheit geleitet werden und das gereinigte Prozesswasser aus der Prozesswasseraufbereitungseinheit in den Stoffauflöser zurückgeführt werden. Ferner ist es auch möglich und bevorzugt, das Prozesswasser aus mehreren Einheiten der Vorrichtung und/oder Papiermaschine abzuführen und der Prozesswasseraufbereitungseinheit zuzuführen und dann das gereinigte Prozesswasser aus der Prozesswasseraufbereitungseinheit einer Einheit, bevorzugt dem Stoffauflöser oder der Sortiervorrichtung der Vorrichtung oder dem Zentrifugalsortierer der Papiermaschine zurückzuführen. Ferner kann das Prozesswasser auch aus zwei oder mehr verschiedenen Einheiten abgeführt und der Prozesswasseraufbereitungseinheit zugeführt werden und das gereinigte Prozesswasser aus der Prozesswasseraufbereitungseinheit in zwei oder mehr verschiedene Einheiten zurückgeführt werden. Erfindungsgemäß und daher auch in jeder der vorgenannten Ausführungsformen ist zumindest eine und sind bevorzugt alle der Einheit(en), aus der Prozesswasser der Prozesswasseraufbereitungseinheit zugeführt wird, und ist zumindest eine und sind bevorzugt alle der Einheit(en), denen in dem anaeroben Reaktor gereinigtes Prozesswasser zurückgeführt wird, ausgewählt aus ein oder mehreren von Stofflöser, Sortiervorrichtung, Entwässerungseinheit, Oxidations-/Reduktionseinheit, Zentrifugalsortierer, Feinsortiervorrichtung, Papiermaschinen-Formpartie, Papiermaschinen-Presspartie, Rejektbehandlungseinheit, Faserrückgewinnungseinheit und Trockenpartie. Das Zurückführen des dem anaeroben Reaktor gereinigtes Prozesswassers aus der Prozesswasseraufbereitungseinheit in die wenigstens eine Einheit der Vorrichtung und/oder Papiermaschine kann dabei direkt erfolgen, d.h. ohne dass weitere Vorrichtungen zwischen dem anaeroben Reaktor und der Einheit vorhanden sind, oder indirekt, indem das in dem anaeroben Reaktor gereinigte Prozesswassers zunächst ein oder mehreren weiteren Reinigungsstufen, wie beispielsweise einer Entkalkung oder Filtration, unterworfen wird.

Ein weiterer Gegenstand der vorliegenden Erfindung ist eine Vorrichtung zur Aufbereitung von Altpapier und/oder Papiermaschine einer Maschine zur Herstellung von Papier aus Altpapier, insbesondere zur Durchführung eines zuvor beschriebenen Verfahrens, wobei die Vorrichtung und/oder die Papiermaschine eine Prozesswasseraufbereitungseinheit zur Reinigung von in der Vorrichtung und/oder der Papiermaschine im Kreislauf geführten Prozesswasser umfasst sowie auch wenigstens eine Einheit ausgewählt aus ein oder mehreren von Stofflöser, Sortiervorrichtung, Entwässerungseinheit, Oxidations-/Reduktionseinheit, Zentrifugalsortierer, Feinsortiervorrichtung, Papiermaschinen-Formpartie, Papiermaschinen-Presspartie, Rejektbehandlungseinheit, Faserrückgewinnungseinheit und Trockenpartie umfasst, und, wobei die Prozesswasseraufbereitungseinheit zur Reinigung von in der Vorrichtung und/oder der Papiermaschine im Kreislauf geführten Prozesswasser umfasst:
i) einen ein oder mehrere Gasabscheider umfassenden anaeroben Reaktor zur anaeroben Reinigung von Prozesswasser mit wenigstens einer Zufuhrleitung zur Zuführung von zu reinigendem Prozesswasser in den anaeroben Reaktor sowie wenigstens einer Abfuhrleitung zur Abführung von gereinigtem Prozesswasser aus dem Reaktor, wobei die Prozesswasseraufbereitungseinheit mit wenigstens einer der wenigstens einen Einheit verbunden ist, so dass bei dem Betrieb der Vorrichtung und/oder Papiermaschine zu reinigendes Prozesswasser aus wenigstens einer Einheit der Prozesswasseraufbereitungseinheit und darin dem anaeroben Reaktor zugeführt wird und nach dem Prozesswasseraufbereitungsschritt gereinigtes Prozesswasser wieder in wenigstens eine Einheit zurückgeführt wird, und
ii) eine Fest-/Flüssig-Trennvorrichtung zur Trennung von aus dem anaeroben Reaktor abgeführten Prozesswasser mit darin gelösten und dispergierten Feststoffen in eine an anorganischen Feststoffen abgereicherte Fraktion und eine an anorganischen Feststoffen angereicherte Fraktion mit einer Abfuhrleitung für die an anorganischen Feststoffen angereicherte Fraktion und mit einer Rückführleitung zur zumindest teilweisen Rückführung der an anorganischen Feststoffen abgereicherten Fraktion in den anaeroben Reaktor, wobei eine weitere Leitung von dem anaeroben Reaktor zu der Fest-/Flüssig-Trennvorrichtung zur Zuführung von aus dem anaeroben Reaktor abgeführten Prozesswasser führt,
wobei die Vorrichtung zur Aufbereitung von Altpapier und/oder Papiermaschine ferner iii) eine Messeinrichtung zur Messung des Gehaltes an anorganischen Feststoffen in dem im anaeroben Reaktor enthaltenen Prozesswasser umfasst und diese auch eine Steuereinrichtung umfasst, welche Messdaten über den Gehalt an anorganischen Feststoffen in dem im anaeroben Reaktor enthaltenen Prozesswasser empfangen kann und in die ein Grenzwert und optional ein Schwellenwert eingegeben werden kann, wobei die Steuereinrichtung so ausgelegt ist, dass diese automatisch die kontinuierliche Abführung von Prozesswasser aus dem anaeroben Reaktor und die Zuführung desselben in die Fest-/Flüssig-Trennvorrichtung startet, wenn ein eingegebener Grenzwert für den anorganischen Feststoffgehalt in dem im anaeroben Reaktor Prozesswasser überschritten wird, und automatisch die kontinuierliche Abführung von Prozesswasser aus dem anaeroben Reaktor und die Zuführung desselben in die Fest-/Flüssig-Trennvorrichtung beendet, wenn der Grenzwert oder ein eingegebener Schwellenwert für den anorganischen Feststoffgehalt in dem im anaeroben Reaktor enthaltenen Prozesswasser unterschritten wird.

Die Messeinrichtung kann einen Ofen und eine Waage umfassen, um das weiter oben geschilderte Messverfahren durchführen zu können. Insbesondere kann es sich bei dem Ofen um einen kontinuierlichen Ofen, wie beispielsweise einen Durchlaufofen, und bei der Waage um eine kontinuierliche Waage handeln. Kontinuierliche Waagen messen Massendurchflüsse, d.h. der Wägeprozess findet nicht punktuell, sondern permanent über eine zuvor festgelegte Messstrecke hinweg statt. Ein Beispiel für eine kontinuierliche Waage sind Coriolis-Durchflussmessgeräte. Alternativ dazu kann die Messeinrichtung auch eine Kombination aus einer Einrichtung zur kontinuierlichen Bestimmung des gesamten Feststoffgehalts des in dem anaeroben Reaktor enthaltenen Prozesswassers und einer Einrichtung zur kontinuierlichen Bestimmung des Gehalts an organischen Feststoffen des in dem anaeroben Reaktor enthaltenen Prozesswassers umfassen, wobei die Differenz des damit bestimmten Gesamtfeststoffgehalts und des Gehalts an organischen Feststoffen dem Gehalt an anorganischen Feststoffen entspricht. Die Einrichtung zur kontinuierlichen Bestimmung des Gehalts an organischen Feststoffen kann beispielsweise einen Nahinfrarot (NIR)-Spektrometer umfassen, wobei die Einrichtung zur kontinuierlichen Bestimmung des gesamten Feststoffgehalts ein Dispersionsdichtemessgerät, ein Transmissionsmessgerät oder dergleichen ist.

Gute Ergebnisse werden insbesondere erhalten, wenn die von dem anaeroben Reaktor zu der Fest-/Flüssig-Trennvorrichtung führende Leitung an den anaeroben Reaktor in dem, bezogen auf die Höhe des anaeroben Reaktors, unteren Bereich bevorzugt in den die unteren 20%, besonders bevorzugt unteren 10% und besonders bevorzugt unteren 5% des anaeroben Reaktors umfassenden Reaktorteils mündet.

Gemäß einer besonders bevorzugten Ausführungsform der vorliegenden Erfindung ist der untere Bereich des anaeroben Reaktors zumindest teilweise konisch ausgebildet.

Gemäß einer Variante ist der untere Bereich des anaeroben Reaktors als Konus ausgebildet, wobei sich der Konus über 1 bis 50%, bevorzugt über 1 bis 20% und besonders bevorzugt über 1 bis 10% der Höhe des anaeroben Reaktors erstreckt.

Gemäß einer dazu alternativen Variante ist es bevorzugt, dass der untere Bereich des anaeroben Reaktors, im Querschnitt gesehen, zickzackförmig ausgestaltet ist, wobei sich der zickzackförmige Bereich über 1 bis 50%, besonders bevorzugt über 1 bis 20% und ganz besonders bevorzugt über 1 bis 10% der Höhe des anaeroben Reaktors erstreckt.

Zudem weist der anaerobe Reaktor bevorzugt im mittleren bis oberen Bereich, vorzugsweise in einer Höhe zwischen 30 und 90% und besonders bevorzugt zwischen 60 und 90% bezogen auf die Höhe des anaeroben Reaktors, ein oder mehrere Gasabscheider auf, die so ausgestaltet sind, dass diese anaerobe Mikroorganismenpellets an einem weiteren Aufströmen in dem anaeroben Reaktor hindern und so dazu führen, dass sich an der Oberfläche der anaerobe Mikroorganismenpellets anhaftendes Gas ablöst und das Gas über die Gasabscheider aus dem anaeroben Reaktor abgeführt wird. Oberhalb der Gasabscheider, aber unterhalb des Flüssigkeitsspiegels sind vorzugsweise Klarwasserüberläufe angeordnet, die mit einer Abfuhrleitung für gereinigtes Prozesswasser verbunden ist.

Vorzugsweise ist die Fest-/Flüssig-Trennvorrichtung so luftdicht ausgestaltet, dass das bei deren Betrieb dieser aus dem anaeroben Reaktor zugeführte Prozesswasser sowie die an anorganischen Feststoffen abgereicherte Fraktion in der Fest-/Flüssig-Trennvorrichtung nicht mit Luft in Berührung kommen.

In Weiterbildung des Erfindungsgedankens wird es vorgeschlagen, dass die Fest-/Flüssig-Trennvorrichtung ein oder mehrere Zentrifugalabscheider umfasst.

Besonders gute Ergebnisse werden insbesondere erhalten, wenn die Fest-/Flüssig-Trennvorrichtung ein oder mehrere Zyklone umfasst.

Gemäß einer weiteren besonders bevorzugten Ausführungsform der vorliegenden Erfindung ist die Fest-/Flüssig-Trennvorrichtung so angeordnet und die Füllhöhe in dem anaeroben Reaktor so einstellbar, dass das Prozesswasser bei dem Betrieb der Vorrichtung und/oder Papiermaschine über die Leitung allein durch die Gravitationskraft aus dem anaeroben Reaktor der Fest-/Flüssig-Trennvorrichtung zuführbar ist.

Vorzugsweise mündet die Rückführleitung für die an anorganischen Feststoffen abgereicherte Fraktion in die Zufuhrleitung zu dem anaeroben Reaktor.

Ferner betrifft die vorliegende Erfindung eine Maschine zur Herstellung von Papier aus Altpapier umfassend eine zuvor beschriebene Vorrichtung zur Aufbereitung von Altpapier und eine zuvor beschriebene Papiermaschine, wobei die Vorrichtung ein, zwei oder mehr Stufen umfasst, wobei jede Stufe eine Entwässerungseinheit und wenigstens eine weitere Einheit ausgewählt aus ein oder mehreren von Stofflöser, Sortiervorrichtung und Oxidations-/Reduktionseinheit umfasst, wobei jede Stufe und die Papiermaschine jeweils eine zuvor beschriebene Prozesswasseraufbereitungseinheit umfassen.

Vorzugsweise umfasst die Papiermaschine wenigstens eine Einheit ausgewählt aus Zentrifugalsortierer, Feinsortiervorrichtung, Papiermaschinen-Formpartie, Papiermaschinen-Presspartie, Rejektbehandlungseinheit, Faserrückgewinnungseinheit und Trockenpartie, bevorzugt wenigstens zwei, weiter bevorzugt wenigstens drei, besonders bevorzugt wenigstens vier, noch weiter bevorzugt wenigstens fünf, noch weiter bevorzugt wenigstens sechs und höchst bevorzugt alle diese umfasst.

Dabei ist die Prozesswasseraufbereitungseinheit mit wenigstens einer Einheit wenigstens einer Stufe der Vorrichtung zur Aufbereitung von Altpapier und/oder mit wenigstens einer Einheit der Papiermaschine so verbunden, dass bei dem Betrieb der Maschine zu reinigendes Prozesswasser aus wenigstens einer der Einheiten dem anaeroben Reaktor zugeführt wird und nach dem Prozesswasseraufbereitungsschritt gereinigtes Prozesswasser wieder in wenigstens eine der Einheiten zurückgeführt wird. Zudem ist es bevorzugt, dass die Prozesswasseraufbereitungseinheit - zusätzlich zu dem anaeroben Reaktor, der Fest-/Flüssig-Trennvorrichtung und der optionalen Messeinrichtung - ein oder mehrere von einer Stoffrückgewinnungseinheit, einem Vorversäuerungsreaktor, einer Kalkeliminationseinheit und einer Filtrationseinheit umfasst. Vorzugsweise umfasst die Prozesswasseraufbereitungseinheit zwei, weiter bevorzugt drei und höchst bevorzugt alle der vier vorstehend genannten zusätzlichen Einheiten. Eine bevorzugte Reihenfolge dieser Einheiten ist, von stromaufwärts nach stromabwärts betrachtet, Stoffrückgewinnungseinheit, Vorversäuerungsreaktor, anaerober Reaktor, Kalkeliminationseinheit und Filtrationseinheit.

Nachfolgend wird die vorliegende Erfindung unter Bezug auf die Zeichnung näher beschrieben, in der:
- Fig. 1: eine schematische Ansicht einer erfindungsgemäßen Maschine zur Herstellung von Papier aus Altpapier umfassend eine erfindungsgemäße Anlage zur Reinigung von in einer Anlage im Kreislauf geführten Prozesswasser gemäß eines Ausführungsbeispiels der vorliegenden Erfindung zeigt.
- Fig. 2: eine detailliertere schematische Ansicht der in der in der Figur 1 gezeigten erfindungsgemäßen Maschine zur Herstellung von Papier aus Altpapier enthaltenen erfindungsgemäßen Anlage zur Reinigung von Prozesswasser.
- Fig. 3: eine schematische Ansicht einer erfindungsgemäßen Anlage zur Reinigung von Prozesswasser gemäß einem anderen Ausführungsbeispiel.

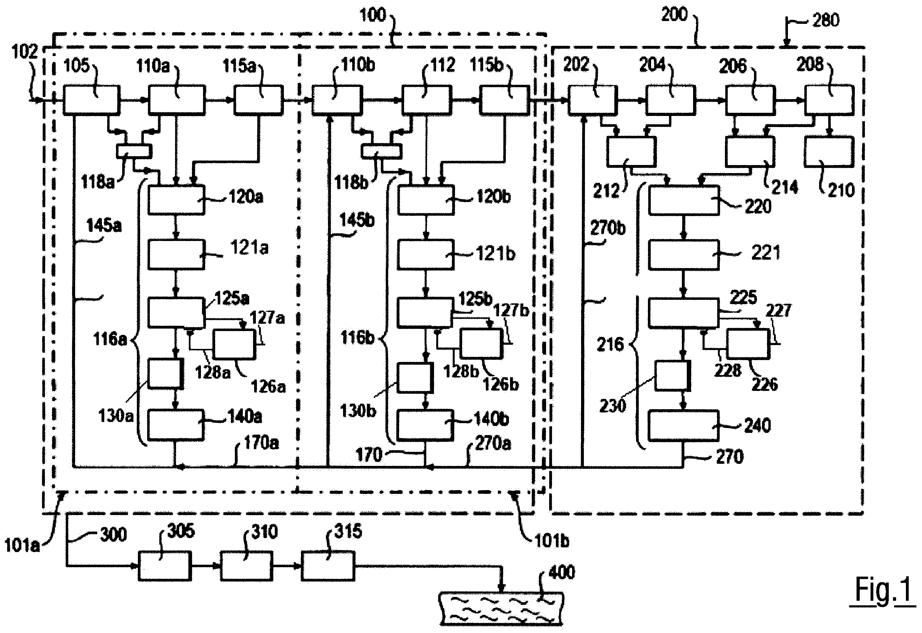

Die in der Fig. 1 gezeigte Anlage umfasst eine Altpapieraufbereitungsvorrichtung 100 sowie eine stromabwärts davon angeordnete, mit der Altpapieraufbereitungsvorrichtung 100 verbundene Papiermaschine 200. Dabei umfasst die Altpapieraufbereitungsvorrichtung 100 zwei voneinander im Wesentlichen entkoppelte und in der Fig. 1 durch die punktgestrichelten Kästen angedeutete Stufen bzw. Loops 101a und 101b.

Die erste Stufe 101a der Papieraufbereitungsvorrichtung 100 umfasst einen Rohstoffeinlass 102, einen Pulper bzw. Stoffauflöser 105, eine Sortiereinrichtung 110a sowie eine Entwässerungseinheit 115a, welche sequentiell angeordnet und jeweils miteinander verbunden sind. Unter Pulper bzw. Stoffauflöser 105 wird im Sinne der vorliegenden Erfindung nicht nur eine, wie in der Fig. 1 schematisch gezeigt, aus einem Vorrichtungsteil bestehende Einrichtung verstanden, sondern insbesondere auch eine mehrere einzelne Vorrichtungsteile umfassende Vorrichtungskombination, welche alle für die Stoffauflösung notwendigen Bauteile bzw. Aggregate beinhaltet. Gleiches gilt auch für die Sortiereinrichtung 110a, die Entwässerungseinheit 115a und alle anderen in der Fig. 1 gezeigten Bauteile.

Der Stoffauflöser 105 und die Sortiereinrichtung 110a sind jeweils über eine Leitung mit einer Rejektbehandlungseinheit 118a verbunden.

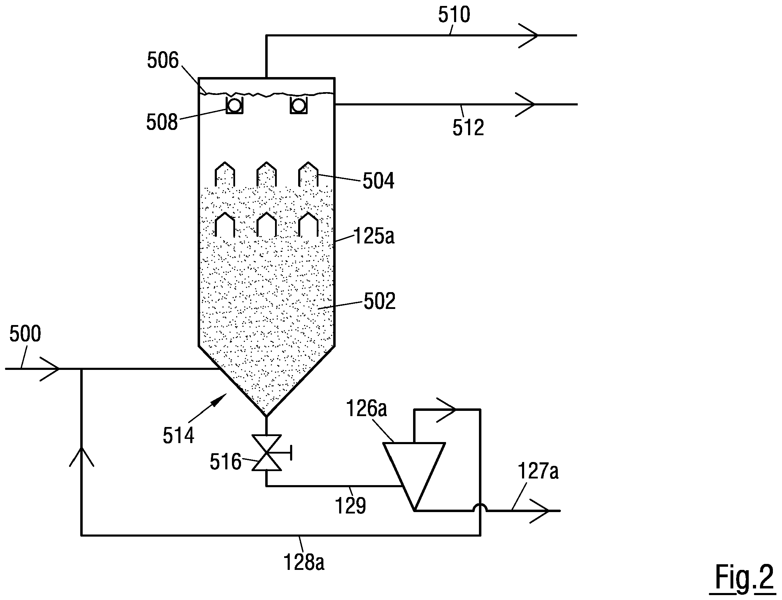

Zudem umfasst die erste Stufe 101a der Altpapieraufbereitungsvorrichtung 100 eine Prozesswasseraufbereitungseinheit 116a, der über entsprechende Leitungen aus der Rejektbehandlungseinheit 118a, aus der Sortiervorrichtung 110a sowie aus der Entwässerungseinheit 115a das in diesen Anlagenteilen anfallende Prozesswasser zugeführt wird. Die Prozesswasseraufbereitungseinheit 116a besteht aus einer Stoffrückgewinnungseinheit 120a, einem Vorversäuerungsreaktor 121a, einer erfindungsgemäßen Anlage zur Reinigung von Prozesswasser, welche einen mit anaeroben Mikroorganismen versetzten anaeroben Reaktor 125a sowie eine Fest-/Flüssig-Trennvorrichtung 126a (zur Trennung von aus dem anaeroben Reaktor 125a abgeführten Prozesswasser in eine an anorganischen Feststoffen abgereicherte Fraktion und eine an anorganischen Feststoffen angereicherte Fraktion) mit einer Abfuhrleitung 127a für die an anorganischen Feststoffen angereicherte Fraktion und mit einer Rückführleitung 128a zur Rückführung der an anorganischen Feststoffen abgereicherten Fraktion in den anaeroben Reaktor 125a umfasst, sowie einer Kalkeliminationseinheit 130a und einer Filtrationseinheit 140a. Dabei ist die Kalkeliminationseinheit 130a als Druckentspannungsflotationseinrichtung ausgestaltet. Die den anaeroben Reaktor 125a sowie die Fest-/Flüssig-Trennvorrichtung 126a umfassende Anlage zur Reinigung von Prozesswasser ist in der Figur 2 detaillierter dargestellt und wird weiter unten detaillierter beschrieben. Von der Filtrationseinheit 140a führt eine Rückführleitung 145a zu dem Stoffauflöser 105 zurück. Zusätzlich zu der Stoffrückgewinnungseinheit 120a oder anstelle der Stoffrückgewinnungseinheit 120a kann in der Altpapieraufbereitungsvorrichtung 100 eine Entstoffungseinheit (nicht dargestellt) vorgesehen sein.

Der Vollständigkeit halber sei angemerkt, dass die Filtrationseinheit 140a optional ist und auf diese auch verzichtet werden kann, also das Filtrat aus der Kalkeliminationseinheit 130a direkt in die Rückführleitung 145a zurückgeführt werden kann. Zudem kann vor oder nach der Sortiervorrichtung 110a ein Zentrifugalsortierer vorgesehen werden. Ferner kann die Stoffrückgewinnungseinheit 120a mit einer Entstoffungseinheit, beispielsweise ausgebildet als Mikroflotationseinrichtung, kombiniert sein.

Im Unterschied zu der ersten Stufe 101a umfasst die zweite Stufe 101b der Altpapieraufbereitungsvorrichtung 100 eine mit der Entwässerungseinheit 115a verbundene Sortiervorrichtung 11 0b, eine Oxidationseinheit bzw. Reduktionseinheit 112 sowie eine Entwässerungseinheit 115b, welche sequentiell angeordnet und miteinander verbunden sind. Zudem weist zweite Stufe 101b eine Prozesswasseraufbereitungseinheit 116b auf, welche analog zu der Prozesswasseraufbereitungseinheit 116a der ersten Stufe 101a aufgebaut ist, also eine als Druckentspannungsflotationseinrichtung ausgestaltete Kalkeliminationseinheit 130b umfasst, wobei die Filtrationseinheit 140b der zweiten Stufe 101b der Altpapieraufbereitungsvorrichtung 100 über eine Rückführleitung 145b mit der Sortiervorrichtung 110b und über eine Teilstromleitung 170a mit der aus der Filtrationseinheit 140a kommenden Rückführleitung 145a der ersten Stufe 101a der Altpapieraufbereitungsvorrichtung 100 verbunden ist. Während die Sortiervorrichtung 110b und die Oxidationseinheit bzw. Reduktionseinheit 112 über entsprechende Leitungen mit einer Rejektbehandlungseinheit 118b verbunden sind, ist die Entwässerungseinheit 115b direkt mit der Stoffrückgewinnungseinheit 120b der Prozesswasseraufbereitungseinheit 116b verbunden. Zudem führt eine Leitung von der Oxidationseinheit bzw. Reduktionseinheit 112 zu der Stoffrückgewinnungseinheit 120b.

Der Vollständigkeit halber sei angemerkt, dass auch die Filtrationseinheit 140b optional ist und auf diese auch verzichtet werden kann. Zudem kann vor oder nach der Sortiervorrichtung 110b ein Zentrifugalsortierer vorgesehen werden. Ferner kann die Stoffrückgewinnungseinheit 120b mit einer Entstoffungseinheit, beispielsweise ausgebildet als Mikroflotationseinrichtung, kombiniert sein.

Die Papiermaschine 200 umfasst einen Zentrifugalsortierer 202, eine Feinsortiervorrichtung 204, eine Papiermaschinen-Formpartie 206, eine Papiermaschinen-Presspartie 208 sowie eine Trockenpartie 210, welche sequentiell angeordnet und miteinander verbunden sind. Der Zentrifugalsortierer 202 sowie die Feinsortiervorrichtung 204 sind mit einer Rejektbehandlungseinheit 212 verbunden und die Papiermaschinen-Formpartie 206 sowie die Papiermaschinen-Presspartie 208 sind mit einer Faserrückgewinnungseinheit 214 verbunden. Zudem sind die Rejektbehandlungseinheit 212 sowie die Faserrückgewinnungseinheit 214 über entsprechende Leitungen mit einer Prozesswasseraufbereitungseinheit 216 verbunden, welche aus einer Entstoffungseinheit 220, einem Vorversäuerungsreaktor 221, einer erfindungsgemäßen Anlage zur Reinigung von Prozesswasser, welche einen mit anaeroben Mikroorganismen versetzten anaeroben Reaktor 225 sowie eine Fest-/Flüssig-Trennvorrichtung 226 (zur Trennung von aus dem anaeroben Reaktor 225 abgeführten Prozesswasser in eine an anorganischen Feststoffen abgereicherte Fraktion und eine an anorganischen Feststoffen angereicherte Fraktion) mit einer Abfuhrleitung 227 für die an anorganischen Feststoffen angereicherte Fraktion und mit einer Rückführleitung 228 zur Rückführung der an anorganischen Feststoffen abgereicherten Fraktion in den anaeroben Reaktor 225 umfasst, und einer Kalkeliminationseinheit 230 sowie einer Filtrationseinheit 240 besteht. Zudem führt eine Rückführleitung 270 von der Filtrationseinheit 240 der Papiermaschine 200 in die Leitung 170 der zweiten Stufe 101b der Altpapieraufbereitungsvorrichtung 100. Die Faserrückgewinnungseinheit 214 und die Entstoffungseinheit 220 können auch in einem beispielsweise als Mikroflotation ausgebildeten Vorrichtungsteil kombiniert sein.

Ferner ist in dem Bereich der Papiermaschine 200 eine Frischwasserzufuhrleitung 280 vorgesehen, über welche der Papiermaschine Frischwasser zugeführt werden kann. Dabei kann die Frischwasserzufuhrleitung 280 an verschiedenen Stellen in der Papiermaschine 200 münden, beispielsweise in der Zufuhrleitung zu dem Zentrifugalsortierer 202 und/oder in der Papiermaschinen-Formpartie 206 und/oder der Papiermaschinen-Presspartie 208, weswegen die genaue Position der Frischwasserzufuhrleitung 280 in der Fig. 1 nicht dargestellt ist. Zudem ist in der Anlage eine Prozesswasserleitung 300 vorgesehen, über die überschüssiges Prozesswasser aus der Anlage abgeführt werden kann. Auch die Prozesswasserleitung 300 kann an verschiedenen Positionen der Anlage angeordnet sein, beispielsweise an der Leitung 170, weswegen auch die genaue Position dieser Prozesswasserleitung 300 in der Fig. 1 nicht dargestellt ist. Die Prozesswasserleitung für überschüssiges Prozesswasser 300 führt in eine mechanische Entstoffungseinheit 305, der eine Kühleinheit 310 sowie eine biologische Behandlungseinheit 315 nachgeschaltet ist. Von der biologischen Behandlungseinheit 315 führt eine Leitung entweder in eine kommunale (oder Verbands-) Kläranlage zur weiter gehende Reinigung oder in ein öffentliches Gewässer 400, beispielsweise in einen Fluss; es kann jedoch auch ein Teilstrom oder das ganze behandelte Prozesswasser bei Bedarf in die Papiermaschine oder die Stoffaufbereitung zurückgeführt werden.

Die in der Figur 2 detaillierter gezeigte erfindungsgemäße Anlage zur Reinigung von Prozesswasser umfasst den anaeroben Reaktor 125a und die als Zyklon 126a ausgebildete Fest-/Flüssig-Trennvorrichtung 126a. In den anaeroben Reaktor 125a mündet im unteren Bereich eine Zufuhrleitung 500, über welche dem anaeroben Reaktor 125a Prozesswasser aus dem Vorversäuerungsreaktor 121a zugeführt wird. In dem anaeroben Reaktor 125a befinden sich zudem Mikroorganismenpellets 502 aus anaeroben Mikroorganismen, welche die in dem Prozesswasser enthaltenen organischen Verunreinigungen zu Kohlendioxid und Methan abbauen. In dem oberen Bereich des anaeroben Reaktor 125a sind mehrere Gasabscheider 504 angeordnet, um die Mikroorganismenpellets mit anhaftenden Gasbläschen an einem weiteren Aufsteigen in dem anaeroben Reaktor 125a zu hindern, und, um die an den Mikroorganismenpellets anhaftenden Gasbläschen von den Mikroorganismenpellets abzulösen. Oberhalb der Gasabscheider 504, aber unterhalb des Flüssigkeitsspiegels 506 sind Klarwasserüberläufe 508 angeordnet. Zudem münden in den oberen Bereich des anaeroben Reaktors 125a eine Gasabfuhrleitung 510 sowie eine Abfuhrleitung 512 für gereinigtes Prozesswasser aus dem anaeroben Reaktor 125a. Der untere Bereich des anaeroben Reaktors 125a ist als Konus 514 ausgebildet und an der unteren Spitze des Konus 514 mündet die Leitung 129 zur Zuführung von Prozesswasser in die Fest-/Flüssig-Trennvorrichtung 126a. In der Leitung 129 ist ein Ventil 516 vorgesehen, welches durch eine Steuereinrichtung (nicht dargestellt) gesteuert wird. Die Leitung 129 führt in die als Zyklon 126a ausgebildete Fest-/Flüssig-Trennvorrichtung 126a, in der das Prozesswasser mit darin gelösten und dispergierten Feststoffen durch Zentrifugalkraft in eine an anorganischen Feststoffen abgereicherte Fraktion und eine an anorganischen Feststoffen angereicherte Fraktion getrennt wird. Die an anorganischen Feststoffen angereicherte Fraktion wird aus dem unteren Bereich des Zyklon 126a abgezogen und über die Abfuhrleitung 127a aus der Anlage abgeführt, wohingegen die an anorganischen Feststoffen abgereicherte Fraktion über die Rückfuhrleitung 128a in die Zuführleitung 500 führt.

Bei dem Betrieb der in den Figuren 1 und 2 gezeigten Anlage wird kontinuierlich Altpapier über den Rohstoffeinlass 102 in den Stoffauflöser 105 der ersten Stufe 101a der Altpapieraufbereitungsvorrichtung 100 eingeführt, in dem das Altpapier mit über die Rückführleitung 145a zugeführten Prozesswasser vermischt und zur Gewinnung der Fasern zerkleinert wird. Während die in dem Stoffauflöser 105 gewonnenen Fasern als Fasersuspension kontinuierlich in die Sortiervorrichtung 110a überführt werden, wird das in dem Stoffauflöser 105 anfallende Prozesswasser, welches Reste an Fasern enthalten kann zunächst in die Rejektbehandlungseinheit 118a geführt und von dort nach Abtrennung der Rejekte in die Stoffrückgewinnungseinheit 120a der Prozesswasseraufbereitungseinheit 116a der Altpapieraufbereitungsvorrichtung 100 geleitet. In der Sortiervorrichtung 110a werden aus der Fasersuspension, beispielsweise durch Siebbarrieren und typischerweise mehrstufig, leichte oder schwere Ungehörigkeiten, welche größer als Fasern sind, wie beispielsweise grobe Verschmutzungen in Form von Plastikfolien und Plastikstücken, aussortiert. Zudem kann in der Sortiervorrichtung 110a auch eine Flotation zum Zweck der Elimination von Pigmenten, Tinte und Farbpartikeln (de-inking) durchgeführt werden. Zudem können bei der Stoffwäsche Feinstoffe und Asche abgetrennt werden. In der stromabwärts der Sortiervorrichtung 110a angeordneten Entwässerungseinheit 115a, welche vorzugsweise als Entwässerungsfilter und/oder als Schneckenpresse ausgebildet ist, wird die Fasersuspension durch Entfernen von Prozesswasser eingedickt, um als eingedickte Fasersuspension von der Entwässerungseinheit 115a in die Sortiervorrichtung 110b der zweiten Stufe 101b der Altpapieraufbereitungsvorrichtung 100 zu gelangen. Ein Teilstrom des in der Sortiervorrichtung 110a anfallenden Prozesswassers wird in die Rejektbehandlungseinheit 118a geführt, wohingegen der andere Teilstrom des in der Sortiervorrichtung 110a anfallenden Prozesswassers zusammen mit dem in der Entwässerungseinheit 115a der ersten Stufe 101a anfallenden Prozesswasser über entsprechende Leitungen direkt in die Stoffrückgewinnungseinheit 120a der Prozesswasseraufbereitungseinheit 116a der ersten Stufe 101a der Altpapieraufbereitungsvorrichtung 100 geführt wird, in der aus dem Prozesswasser darin enthaltene Faserstoffe abgetrennt werden, welche erneut dem Aufbereitungsprozess zugeführt werden. Vorzugsweise ist die Stoffrückgewinnungseinheit 120a als Druckentspannungsflotationsvorrichtung ausgestaltet.

Bei der in der Fig. 1 dargestellten Anlage wird das in der Rejektbehandlungseinheit 118a anfallende Prozesswasser in die Stoffrückgewinnungseinheit 120a geleitet. Von der Stoffrückgewinnungseinheit 120a wird kontinuierlich von Faserstoffen befreites Prozesswasser zunächst in den Vorversäuerungsreaktor 121a geleitet, in dem das Prozesswasser einer Hydrolyse und Azidifikation unterworfen wird. Danach wird das Prozesswasser in die erfindungsgemäße Anlage zur Reinigung von Prozesswasser geleitet, welche einen mit anaeroben Mikroorganismen versetzten anaeroben Reaktor 125a sowie eine Fest-/Flüssig-Trennvorrichtung 126a (zur Trennung von aus dem anaeroben Reaktor 125a abgeführten Prozesswasser in eine an anorganischen Feststoffen abgereicherte Fraktion und eine an anorganischen Feststoffen angereicherte Fraktion) mit einer Abfuhrleitung 127a für die an anorganischen Feststoffen angereicherte Fraktion und mit einer Rückführleitung 128a zur Rückführung der an anorganischen Feststoffen abgereicherten Fraktion in den anaeroben Reaktor 125a umfasst. In den mit anaeroben Mikroorganismen 502 versetzten anaeroben Reaktor 125a werden die in dem Prozesswasser enthaltenen organischen Verunreinigungen durch die Wirkung der anaeroben Mikroorganismen überwiegend zu Kohlendioxid und Methan zersetzt. Das so gebildete Gas haftet größtenteils in Form von kleinen Gasbläschen an den Mikroorganismenpellets 502 an, deren Dichte dadurch abnimmt, so dass die Mikroorganismenpellets 502 mit anhaftenden Gasbläschen in dem anaeroben Reaktor 125a nach oben steigen. Dabei gelangen diese in die in dem oberen Bereich des anaeroben Reaktors 125a angeordneten Gasabscheider 504, in denen sich das Biogas von den Mikroorganismenpellets 502 abtrennt und dann über die Gasabfuhrleitung 510 aus dem anaeroben Reaktor 125a abgeführt wird. Gereinigtes Prozesswasser steigt in dem anaeroben Reaktor 125a durch die durch den Prozesswasserzulauf verursachte aufwärtsgerichtete Strömung weiter nach oben, wo dieses über die Klarwasserüberläufe 508 abgezogen und über die Abfuhrleitung für gereinigtes Prozesswasser 512 abgeführt und der Kalkeliminationseinheit 130a und weiter der Filtrationseinheit 140a zugeführt wird. Aus dem Altpapier stammende anorganische Feststoffe, wie insbesondere Kalk, werden durch die Mikroorganismenpellets 502 nicht zersetzt und sammeln sich somit in dem anaeroben Reaktor 125a an. Aufgrund ihrer Struktur und Größe wirken die Mikroorganismenpellets 502 als Kristallisationskeime für Ablagerungen von anorganischen Feststoffen und insbesondere von Kalk, so dass sich bei einem gewissen Gehalt von anorganischen Feststoffen und insbesondere von Kalk mit den vorstehend im Detail beschriebenen Nachteilen anorganische Feststoffe und insbesondere Kalk auf den Mikroorganismenpellets 502 abscheiden. Um dies zu verhindern, werden erfindungsgemäß aus dem anaeroben Reaktor 125a zu festgelegten Zeitpunkten Prozesswasserproben entnommen, von denen der Gehalt an anorganischen Feststoffen gemessen wird. Dies erfolgt, indem die Probe des Prozesswassers filtriert wird, der bei der Filtration erhaltene Rückstand in einem Ofen bei 105°C getrocknet wird, bis kein Masseverlust mehr auftritt, um einen getrockneten Feststoffrückstand zu erhalten, die Masse des getrockneten Feststoffrückstands gemessen wird, der getrocknete Feststoffrückstand in einem Ofen bei 550°C wärmebehandelt wird, bis kein Masseverlust mehr auftritt, um einen wärmebehandelten Feststoffrückstand zu erhalten, und die Masse des wärmebehandelten Feststoffrückstandes gemessen wird. Der Gehalt an anorganischen Feststoffen in dem Prozesswasser wird dann einfach als Quotient der Masse des wärmebehandelten Feststoffrückstandes und der Masse des getrockneten Feststoffrückstands berechnet. Die bestimmten Werte werden in eine Steuereinrichtung (nicht dargestellt) eingegeben, in die bereits zu Beginn des Verfahrens ein Grenzwert für den Gehalt an anorganischen Feststoffen in dem Prozesswasser von beispielsweise 37 Gew.-% eingegeben wurde. Die Steuereinrichtung vergleicht den gemessenen Feststoffgehalt mit dem Grenzwert. Wenn der gemessene Gehalt an anorganischen Feststoffen in dem Prozesswasser höher als der Grenzwert ist, wird durch die Steuereinrichtung das in der Zufuhrleitung 129 angeordnete Ventil 516 so gesteuert, dass kontinuierlich Prozesswasser aus dem anaeroben Reaktor 125a abgeführt und der Fest-/Flüssig-Trennvorrichtung 126a zugeführt wird. In der als Zyklon 126a ausgebildeten Fest-/Flüssig-Trennvorrichtung 126a wird das Prozesswasser in eine an anorganischen Feststoffen abgereicherte Fraktion und eine an anorganischen Feststoffen angereicherte Fraktion getrennt. Die an anorganischen Feststoffen abgereicherte Fraktion wird über die Rückfuhrleitung 128a in den anaeroben Reaktor 125a zurückgeführt, wohingegen die an anorganischen Feststoffen angereicherte Fraktion über die Abfuhrleitung 127a aus der Anlage abgeführt wird. Dabei wird das Verfahren bevorzugt so durchgeführt, dass das Prozesswasser in dem Zyklon 126a so getrennt wird, dass die an anorganischen Feststoffen abgereicherte Fraktion einen Gehalt an anorganischen Feststoffen aufweist, welcher beispielsweise 0,7 bis 1,0 kg/l beträgt, wohingegen die an anorganischen Feststoffen angereicherte Fraktion einen Gehalt an anorganischen Feststoffen aufweist, welcher beispielsweise 2,5 kg/l beträgt, und, dass der Anteil der an anorganischen Feststoffen abgereicherten Fraktion 90 Vol.-% und der Anteil der an anorganischen Feststoffen angereicherten Fraktion 100 Vol.-% des Volumenstroms des in den Zyklon 126a eingeführten Prozesswassers beträgt. Sobald eine später durchgeführte Messung einer anderen Probe von Prozesswasser einen unterhalb des Grenzwertes liegenden Wert ergibt, schaltet die Steuereinrichtung das Ventil 516 ab, so dass der Fest-/Flüssig-Trennvorrichtung 126a bzw. dem Zyklon 126a kein Prozesswasser mehr zugeführt wird. Aus dem anaeroben Reaktor 125a wird über die Leitung 512 das gereinigte, also von den chemischen und biologischen Verunreinigungen befreite Prozesswasser in die stromabwärts gelegene Kalkeliminationseinheit 130a und dann in die Filtrationseinheit 140a zugeführt, welche beispielsweise als Sandfiltrationseinheit ausgebildet ist, um das restliche partikuläre Material aus dem Prozesswasser zu entfernen. Zudem kann der Filtrationseinheit 140a eine Entsalzungseinheit (nicht dargestellt) nachgeschaltet sein.

Über die Rückführleitung 145a wird das in der Prozessaufbereitungseinheit 116a der ersten Stufe 101a der Altpapieraufbereitungsvorrichtung 100 gereinigte und entkalkte Prozesswasser in den Pulper bzw. Stoffauflöser 105 zurückgeführt.

Die aus der Entwässerungseinheit 115a der ersten Stufe 101a der Altpapieraufbereitungsvorrichtung 100 abgeführte, eingedickte Fasersuspension gelangt in die Sortierstufe 110b und von dort in eine Oxidationseinheit bzw. Reduktionseinheit 112, bevor die Fasersuspension in der Entwässerungseinheit 115b der zweiten Stufe 101b eingedickt wird, um aus der Fasersuspension so viel wie möglich des Prozesswassers zu entfernen. Analog zu der ersten Stufe 101a der Altpapieraufbereitungsvorrichtung 100 wird das in der Sortiervorrichtung 110b anfallende Prozesswasser und ein Teilstrom des in der Oxidationseinheit bzw. Reduktionseinheit 112 anfallenden Prozesswassers in die Rejektbehandlungseinheit 118b geführt und das dort anfallende Prozesswasser in die Stoffrückgewinnungseinheit 120b geleitet. Der andere Teilstrom des in der Oxidationseinheit bzw. Reduktionseinheit 112 anfallenden Prozesswassers sowie das in der Entwässerungseinheit 115b anfallende Prozesswasser werden direkt in die Stoffrückgewinnungseinheit 120b der Prozesswasseraufbereitungseinheit 116b der zweiten Stufe 101b der Altpapieraufbereitungsvorrichtung 100 geleitet und in der Prozesswasseraufbereitungseinheit 116b gereinigt sowie entkalkt. Das so behandelte Prozesswasser gelangt von der Filtrationseinheit 140b über die Leitung 170 und die Rückführleitung 145b größtenteils in die Sortiervorrichtung 110b zurück, wohingegen ein möglicher Überschuss an Prozesswasser über die Teilstromleitung 170a zu der ersten Stufe 101a der Altpapieraufbereitungsvorrichtung 100 zurückgeführt und in die zu dem Stoffauflöser 105 führende Rückführleitung 145a geleitet wird.

In der Papiermaschine 200 wird die kontinuierlich aus der Entwässerungseinheit 115b zugeführte, eingedickte Faserstoffsuspension mittels des Zentrifugalsortierers 202, in dem Teile mit einem höheren oder niedrigen spezifischen Gewicht als Wasser abgetrennt werden, der Feinsortiervorrichtung 204, der Papiermaschinen-Formpartie 206, der Papiermaschinen-Presspartie 208 und der Trockenpartie 210 zu Papier verarbeitet. Während das in den Anlagenteilen 202 und 204 anfallende Prozesswasser in die Rejektbehandlungseinheit 212 geführt wird, wird das in den Anlagenteilen 206 und 208 anfallende Prozesswasser in die Faserrückgewinnungseinheit 214 geleitet. Während die Rejekte in der Rejektbehandlungseinheit 212 entwässert werden, wird in der Faserrückgewinnungseinheit 214 das aus der Papiermaschinen-Formpartie 206 und der Papiermaschinen-Presspartie 208 stammende Prozesswasser vorentstofft und aus diesem Fasern abgetrennt. In der Rejektbehandlungseinheit 212 sowie in der Faserrückgewinnungseinheit 214 anfallendes Prozesswasser wird kontinuierlich in die Prozesswasseraufbereitungseinheit 216 der Papiermaschine 200 geleitet und durchströmt dort sequentiell die Entstoffungseinheit 220, den Vorversäuerungsreaktor 221, den anaeroben Reaktor 225 und, sofern der Grenzwert überschritten wird, der Fest-/Flüssig-Trennvorrichtung, die Kalkeliminationseinheit 230 und die Filtrationseinheit 240, welche wie die zuvor beschriebenen entsprechenden Anlagenteile der Prozesswasseraufbereitungseinheiten 116a, 116b der Altpapieraufbereitungsvorrichtung 100 arbeiten. Alternativ dazu kann das in der Rejektbehandlungseinheit 212 anfallende Prozesswasser als Abwasser aus der Anlage abgeführt werden und nur das in der Faserrückgewinnungseinheit 214 anfallende Prozesswasser kontinuierlich durch die Prozesswasseraufbereitungseinheit 216 der Papiermaschine 200 geleitet werden. Das aus der Filtrationseinheit 240 abgezogene, gereinigte und entkalkte Prozesswasser wird über die Rückführleitung 270 und die Teilstromleitung 270b größtenteils in den Zentrifugalsortierer 202 der Papiermaschine 200 zurückgeleitet, wohingegen ein möglicher Überschuss an Prozesswasser über die Teilstromleitung 270a in die aus der Filtrationseinheit 140b der zweiten Stufe 101b der Altpapieraufbereitungsvorrichtung 100 kommende Leitung 170 geleitet wird.

Ein vollkommen geschlossener Prozesswasserkreislauf ist grundsätzlich möglich, würde aber eventuell auf lange Sicht zu Anreicherungen von Störstoffen führen, die letztendlich die Wirtschaftlichkeit der Anlage beeinträchtigen würden. Dem Prozess, vorzugsweise der Papiermaschine 200, wird über die Frischwasserzufuhrleitung 280 kontinuierlich ein, bezogen auf die Menge an in der Trockenpartie verdunstendem Wasser, relativ geringer Anteil an Frischwasser zugeführt. Es besteht die Möglichkeit bei Produktionen mit besonderen Anforderungen an niedrig Störstoffgehalt, wie z.B. Salze, eine entsprechende Menge an Prozesswasser über die Prozesswasserleitung 300 aus dem Prozess zu entfernen und über die Entstoffungseinheit 305, die Kühleinheit 310 und die biologische Behandlungseinheit 315 weiter aufgereinigt, bevor dieser Strom als Abwasser in öffentliche Kanalisation oder Gewässer 400 abgeleitet wird. Zudem kann auch das, wie vorstehend erwähnt, optional aus den Rejektbehandlungseinheiten 118a, 118b, 212 abgeführte Prozesswasser über die Prozesswasserleitung 300 aus dem Prozess entfernt und über die Entstoffungseinheit 305, die Kühleinheit 310 und die biologische Behandlungseinheit 315 aufgereinigt und in den Prozess zurückgeführt zu werden.

In der Fig. 1 umfasst die Anlage eine zweistufige Stoffaufbereitung. Selbstverständlich ist es auch möglich, insbesondere bei der Herstellung von mehrlagigem Papier, zwei oder mehr parallele Stoffaufbereitungen vorzusehen.

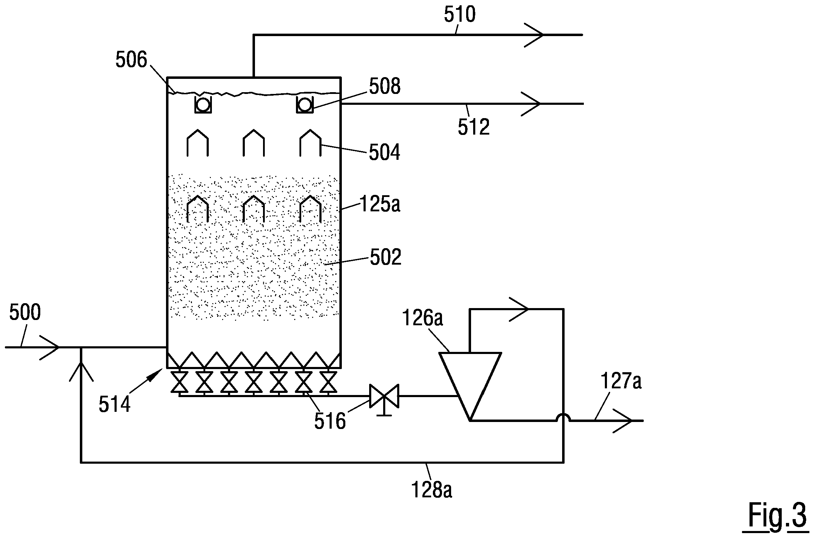

Der in der Figur 2 gezeigte anaerobe Reaktor 125a weist einen unteren Bereich auf, der als Konus ausgebildet ist. Gemäß einer dazu alternativen und in der Figur 3 gezeigten Ausführungsform kann der anaerobe Reaktor 125a auch einen unteren Bereich aufweisen, der mehrere Konusse aufweist. Wie in der Figur 3 gezeigt, ist bei dieser alternativen Ausführungsform der untere Bereich des anaeroben Reaktors, im Querschnitt gesehen, zickzackförmig ausgestaltet. Bei dieser Ausführungsform umfasst der Reaktorboden mithin mehrere benachbarte konische Bereiche, so dass die Gesamtfläche der Schrägen der Reaktorwand des Reaktorbodens größer ist als bei der zuvor beschriebenen Ausführungsform, bei welcher der Reaktorboden als ein Konus ausgebildet ist.

### Bezugszeichenliste

- 100: Altpapieraufbereitungsvorrichtung
- 101a: erste Stufe der Altpapieraufbereitungsvorrichtung
- 101b: zweite Stufe der Altpapieraufbereitungsvorrichtung
- 102: Rohstoffeinlass
- 105: Pulper/Stoffauflöser
- 110a, 110b: Sortiervorrichtung
- 112: Oxidationseinheit/Reduktionseinheit
- 115a, 115b: Entwässerungseinheit
- 116a, 116b: Prozesswasseraufbereitungseinheit der Stoff-/Altpapieraufbereitungsvorrichtung
- 118a, 118b: Rejektbehandlungseinheit
- 120a, 120b: Stoffrückgewinnungseinheit
- 121a, 121b: Vorversäuerungsreaktor
- 125a, 125b: anaerober Reaktor
- 126a, 126b: Fest-/Flüssig-Trennvorrichtung/Zyklon
- 127a, 127b: Abfuhrleitung
- 128a, 128b: Rückführleitung
- 129: Leitung zur Zuführung von Prozesswasser in die Fest-/Flüssig-Trennvorrichtung
- 130a, 130b: Kalkeliminationseinheit
- 140a, 140b: Filtrationseinheit
- 145a, 145b: Rückführleitung
- 170: Leitung
- 170a: Teilstromleitung
- 200: Papiermaschine
- 202: Zentrifugalsortierer
- 204: Feinsortiervorrichtung
- 206: Papiermaschinen-Formpartie
- 208: Papiermaschinen-Presspartie
- 210: Trockenpartie
- 212: Rejektbehandlungseinheit
- 214: Faserrückgewinnungseinheit
- 216: Prozesswasseraufbereitungseinheit der Papiermaschine
- 220: Entstoffungseinheit
- 221: Vorversäuerungsreaktor
- 225: anaerober Reaktor
- 226: Fest-/Flüssig-Trennvorrichtung/Zyklon
- 227: Abfuhrleitung
- 228: Rückführleitung
- 230: Kalkeliminationseinheit
- 240: Filtrationseinheit
- 270: Rückführleitung
- 270a, 270b: Teilstromleitung
- 280: Frischwasserzufuhrleitung
- 300: Prozesswasserleitung
- 305: mechanische Entstoffungseinheit
- 310: Kühleinheit
- 315: biologische Behandlungseinheit
- 400: öffentliches Gewässer
- 500: Zufuhrleitung
- 502: Mikroorganismenpellets
- 504: Gasabscheider
- 506: Flüssigkeitsspiegel
- 508: Klarwasserüberläufe
- 510: Gasabfuhrleitung
- 512: Abfuhrleitung für gereinigtes Prozesswasser
- 514: Konus/konischer Bereich
- 516: Ventil

## Patentansprüche

1. Verfahren zur kontinuierlichen Reinigung von in einer Vorrichtung zur Aufbereitung von Altpapier (100) und/oder in der Papiermaschine (200) einer Maschine zur Herstellung von Papier aus Altpapier im Kreislauf geführten Prozesswasser, bei dem zu reinigendes Prozesswasser aus wenigstens einer Einheit der Vorrichtung (100) und/oder der Papiermaschine (200) einer Prozesswasseraufbereitungseinheit mit einem ein oder mehrere Gasabscheider (504) umfassenden anaeroben Reaktor (125a, 125b, 225) zugeführt wird, das Prozesswasser in dem anaeroben Reaktor (125a, 125b, 225) mit anaeroben Mikroorganismen kontaktiert wird, um in dem Prozesswasser enthaltene Verunreinigungen abzubauen, und das gereinigte Prozesswasser aus dem anaeroben Reaktor (125a, 125b, 225) abgeführt sowie wieder wenigstens einer Einheit der Vorrichtung (100) und/oder der Papiermaschine (200) zurückgeführt wird, wobei wenigstens eine Einheit ausgewählt ist aus ein oder mehreren von Stofflöser (105), Sortiervorrichtung (110a, 110b), Entwässerungseinheit (115a, 115b), Oxidations-/Reduktionseinheit (112), Zentrifugalsortierer (202), Feinsortiervorrichtung (204), Papiermaschinen-Formpartie (206), Papiermaschinen-Presspartie (208), Rejektbehandlungseinheit (118a, 118b, 212), Faserrückgewinnungseinheit (214) und Trockenpartie (210), wobei bei dem Verfahren kontinuierlich oder diskontinuierlich der Gehalt an anorganischen Feststoffen in dem im anaeroben Reaktor (125a, 125b, 225) enthaltenen Prozesswasser gemessen wird, und, wenn der Gehalt an anorganischen Feststoffen in dem im anaeroben Reaktor (125a, 125b, 225) enthaltenen Prozesswasser einen voreingestellten Grenzwert überschreitet, Prozesswasser mit darin gelösten und dispergierten Feststoffen aus dem anaeroben Reaktor (125a, 125b, 225) kontinuierlich solange einer Fest-/Flüssig-Trennvorrichtung (126a, 126b, 226) zur Trennung in eine an anorganischen Feststoffen abgereicherte Fraktion und eine an anorganischen Feststoffen angereicherte Fraktion zugeführt wird, wobei die an anorganischen Feststoffen abgereicherte Fraktion zumindest teilweise in den anaeroben Reaktor (125a, 125b, 225) zurückgeführt wird und die an anorganischen Feststoffen angereicherte Fraktion aus der Vorrichtung (100) und/oder der (200) Papiermaschine abgeführt wird, bis der Gehalt an anorganischen Feststoffen in dem im anaeroben Reaktor (125a, 125b, 225) enthaltenen Prozesswasser weniger als der voreingestellten Grenzwert beträgt.

2. Verfahren nach Anspruch 1, **dadurch gekennzeichnet, dass** das der Fest-/Flüssig-Trennvorrichtung (126a, 126b, 226) kontinuierlich zugeführte Prozesswasser aus dem anaeroben Reaktor (125a, 125b, 225) aus dem, bezogen auf die Höhe des anaeroben Reaktors (125a, 125b, 225), unteren Bereich des anaeroben Reaktors (125a, 125b, 225), bevorzugt aus den unteren 20%, besonders bevorzugt unteren 10% und besonders bevorzugt unteren 5% des anaeroben Reaktor (125a, 125b, 225) entnommen wird.

3. Verfahren nach einem der vorhergehenden Ansprüche, **dadurch gekennzeichnet, dass** der Grenzwert für den Gehalt an anorganischen Feststoffen in dem im anaeroben Reaktor (125a, 125b, 225) enthaltenen Prozesswasser auf einen Wert zwischen 30 und 45 Gew.-%, bevorzugt zwischen 34 und 40 Gew.-% und besonders bevorzugt zwischen 36 und 38 Gew.-% voreingestellt wird.

4. Verfahren nach einem der vorhergehenden Ansprüche, **dadurch gekennzeichnet, dass** Prozesswasser aus dem anaeroben Reaktor (125a, 125b, 225) kontinuierlich solange einer Fest-/Flüssig-Trennvorrichtung (126a, 126b, 226) zugeführt wird und die an anorganischen Feststoffen abgereicherte Fraktion zumindest teilweise in den anaeroben Reaktor (125a, 125b, 225) zurückgeführt wird, bis der Gehalt an anorganischen Feststoffen in dem im anaeroben Reaktor (125a, 125b, 225) enthaltenen Prozesswasser mindestens 1% weniger, bevorzugt mindestens 2% weniger, besonders bevorzugt mindestens 5% weniger und höchst bevorzugt mindestens 10% weniger als der voreingestellten Grenzwert beträgt.

5. Verfahren nach einem der vorhergehenden Ansprüche, **dadurch gekennzeichnet, dass** das Prozesswasser in der Fest-/Flüssig-Trennvorrichtung (126a, 126b, 226) so aufgetrennt wird, dass, bezogen auf den Volumenstrom des der Fest-/Flüssig-Trennvorrichtung (126a, 126b, 226) zugeführten Prozesswassers, der Anteil der an anorganischen Feststoffen abgereicherten Fraktion wenigstens 70 Vol.-%, bevorzugt wenigstens 80 Vol.-% und besonders bevorzugt wenigstens 90 Vol.-% und der Anteil der an anorganischen Feststoffen angereicherten Fraktion den Rest auf 100 Vol.-% beträgt.

6. Verfahren nach einem der vorhergehenden Ansprüche, **dadurch gekennzeichnet, dass** das Prozesswasser in der Fest-/Flüssig-Trennvorrichtung (126a, 126b, 226) so aufgetrennt wird, dass der Gehalt an anorganischen Feststoffen in der an anorganischen Feststoffen angereicherten Fraktion um wenigstens 25%, bevorzugt um wenigstens 50%, besonders bevorzugt um wenigstens 75% und höchst bevorzugt um wenigstens 100% höher ist als der Gehalt an anorganischen Feststoffen in der an anorganischen Feststoffen abgereicherten Fraktion.

7. Verfahren nach einem der vorhergehenden Ansprüche, **dadurch gekennzeichnet, dass** die Fest-/Flüssig-Trennvorrichtung (126a, 126b, 226) ein oder mehrere Zentrifugalabscheider (126a, 126b, 226) und bevorzugt ein oder mehrere Zyklone (126a, 126b, 226) umfasst.

8. Vorrichtung zur Aufbereitung von Altpapier (100) und/oder Papiermaschine (200) einer Maschine zur Herstellung von Papier aus Altpapier, insbesondere zur Durchführung eines Verfahrens gemäß einem der vorhergehenden Ansprüche, wobei die Vorrichtung (100) und/oder die Papiermaschine (200) eine Prozesswasseraufbereitungseinheit (116a, 116b, 216) zur Reinigung von in der Vorrichtung (100) und/oder der Papiermaschine (200) im Kreislauf geführten Prozesswasser umfasst sowie auch wenigstens eine Einheit ausgewählt aus ein oder mehreren von Stofflöser (105), Sortiervorrichtung (110a, 110b), Entwässerungseinheit (115a, 115b), Oxidations-/Reduktionseinheit (112), Zentrifugalsortierer (202), Feinsortiervorrichtung (204), Papiermaschinen-Formpartie (206), Papiermaschinen-Presspartie (208), Rejektbehandlungseinheit (118a, 118b, 212), Faserrückgewinnungseinheit (214) und Trockenpartie (210) umfasst, und, wobei die Prozesswasseraufbereitungseinheit (116a, 116b, 216) umfasst:
i) einen ein oder mehrere Gasabscheider (504) umfassenden anaeroben Reaktor (125a, 125b, 225) zur anaeroben Reinigung von Prozesswasser mit wenigstens einer Zufuhrleitung (500) zur Zuführung von zu reinigendem Prozesswasser in den anaeroben Reaktor (125a, 125b, 225) sowie wenigstens einer Abfuhrleitung (512) zur Abführung von gereinigtem Prozesswasser aus dem Reaktor (125a, 125b, 225), wobei die Prozesswasseraufbereitungseinheit (116a, 116b, 216) mit wenigstens einer der wenigstens einen Einheit verbunden ist, so dass bei dem Betrieb der Vorrichtung (100) und/oder Papiermaschine (200) zu reinigendes Prozesswasser aus wenigstens einer Einheit der Prozesswasseraufbereitungseinheit (116a, 116b, 216) und darin dem anaeroben Reaktor (125a, 125b, 225) zugeführt wird und nach dem Prozesswasseraufbereitungsschritt gereinigtes Prozesswasser wieder in wenigstens eine Einheit zurückgeführt wird, und
ii) eine Fest-/Flüssig-Trennvorrichtung (126a, 126b, 226) zur Trennung von aus dem anaeroben Reaktor (125a, 125b, 225) abgeführten Prozesswasser mit darin gelösten und dispergierten Feststoffen in eine an anorganischen Feststoffen abgereicherte Fraktion und eine an anorganischen Feststoffen angereicherte Fraktion mit einer Abfuhrleitung (127a, 127b, 227) für die an anorganischen Feststoffen angereicherte Fraktion und mit einer Rückführleitung (128a, 128b, 228) zur zumindest teilweisen Rückführung der an anorganischen Feststoffen abgereicherten Fraktion in den anaeroben Reaktor (125a, 125b, 225), wobei eine weitere Leitung von dem anaeroben Reaktor (125a, 125b, 225) zu der Fest-/Flüssig-Trennvorrichtung (126a, 126b, 226) zur Zuführung von aus dem anaeroben Reaktor (125a, 125b, 225) abgeführten Prozesswasser führt,
wobei die Vorrichtung zur Aufbereitung von Altpapier (100) und/oder Papiermaschine (200) ferner iii) eine Messeinrichtung zur Messung des Gehaltes an anorganischen Feststoffen in dem im anaeroben Reaktor (125a, 125b, 225) enthaltenen Prozesswasser umfasst und diese auch eine Steuereinrichtung umfasst, welche Messdaten über den Gehalt an anorganischen Feststoffen in dem im anaeroben Reaktor (125a, 125b, 225) enthaltenen Prozesswasser empfangen kann und in die ein Grenzwert und optional ein Schwellenwert eingegeben werden kann, wobei die Steuereinrichtung so ausgelegt ist, dass diese automatisch die kontinuierliche Abführung von Prozesswasser aus dem anaeroben Reaktor (125a, 125b, 225) und die Zuführung desselben in die Fest-/Flüssig-Trennvorrichtung (126a, 126b, 226) startet, wenn ein eingegebener Grenzwert für den anorganischen Feststoffgehalt in dem im anaeroben Reaktor (125a, 125b, 225) Prozesswasser überschritten wird, und automatisch die kontinuierliche Abführung von Prozesswasser aus dem anaeroben Reaktor (125a, 125b, 225) und die Zuführung desselben in die Fest-/Flüssig-Trennvorrichtung (126a, 126b, 226) beendet, wenn der Grenzwert oder ein eingegebener Schwellenwert für den anorganischen Feststoffgehalt in dem im anaeroben Reaktor (125a, 125b, 225) enthaltenen Prozesswasser unterschritten wird.

9. Vorrichtung (100) und/oder Papiermaschine (200) nach Anspruch 8, **dadurch gekennzeichnet, dass** der untere Bereich des anaeroben Reaktors (125a, 125b, 225), im Querschnitt gesehen, zickzackförmig ausgestaltet ist, wobei sich der zickzackförmige Bereich über 1 bis 50%, besonders bevorzugt über 1 bis 20% und ganz besonders bevorzugt über 1 bis 10% der Höhe des anaeroben Reaktors (125a, 125b, 225) erstreckt.

10. Vorrichtung (100) und/oder Papiermaschine (200) nach Ansprüche 8 oder 9, **dadurch gekennzeichnet, dass** der untere Bereich des anaeroben Reaktors (125a, 125b, 225), im Querschnitt gesehen, als Konus (514) ausgestaltet ist, wobei sich der Konus (514) über 1 bis 50%, besonders bevorzugt über 1 bis 20% und ganz besonders bevorzugt über 1 bis 10% der Höhe des anaeroben Reaktors (125a, 125b, 225) erstreckt.

11. Vorrichtung (100) und/oder Papiermaschine (200) nach einem der Ansprüche 8 bis 10, **dadurch gekennzeichnet, dass** die Fest-/Flüssig-Trennvorrichtung (126a, 126b, 226) ein oder mehrere Zentrifugalabscheider (126a, 126b, 226) und bevorzugt ein oder mehrere Zyklone (126a, 126b, 226) umfasst.

12. Maschine zur Herstellung von Papier aus Altpapier umfassend eine Vorrichtung zur Aufbereitung von Altpapier (100) und eine Papiermaschine (200) nach einem der Ansprüche 8 bis 11, **dadurch gekennzeichnet, dass** die Vorrichtung (100) ein, zwei oder mehr Stufen (101a, 101b) umfasst, wobei jede Stufe (101a, 101b) eine Entwässerungseinheit (115a, 115b) und wenigstens eine weitere Einheit ausgewählt aus ein oder mehreren von Stofflöser (105), Sortiervorrichtung (110a, 110b) und Oxidations-/Reduktionseinheit (112) umfasst, wobei jede Stufe (101a, 101b) und die Papiermaschine (200) jeweils eine Prozesswasseraufbereitungseinheit (116a, 116b, 216) mit den die Prozesswasseraufbereitungseinheit betreffenden Merkmalen eines der Ansprüche 10 bis 17 umfassen.

13. Maschine nach Anspruch 12, **dadurch gekennzeichnet, dass** die Papiermaschine (200) wenigstens eine Einheit ausgewählt aus Zentrifugalsortierer (202), Feinsortiervorrichtung (204), Papiermaschinen-Formpartie (206), Papiermaschinen-Presspartie (208), Rejektbehandlungseinheit (212), Faserrückgewinnungseinheit (214) und Trockenpartie (210) und bevorzugt alle diese umfasst.

## Claims

1. A method for continuous cleaning of process water circulated in a device for the treatment of waste paper (100) and/or in the paper machine (200) of a machine for the production of paper from waste paper, in which process water to be cleaned is supplied from at least one unit of the device (100) and/or the paper machine (200) to a process water treatment unit having an anaerobic reactor (125a, 125b, 225) comprising one or more gas separators (504), the process water is contacted with anaerobic microorganisms in the anaerobic reactor (125a, 125b, 225) in order to break down impurities contained in the process water, and the cleaned process water is discharged from the anaerobic reactor (125a, 125b, 225) and returned to at least one unit of the device (100) and/or the paper machine (200), wherein at least one unit is selected from one or more of a pulper (105), a sorting device (110a, 110b), a dewatering unit (115a, 115b), an oxidation/reduction unit (112), a centrifugal sorting device (202), a fine sorting device (204), a paper machine forming section (206), a paper machine pressing section (208), a reject treatment unit (118a, 118b, 212), a fiber recovery unit (214) and a dryer section (210), in which method the content of inorganic solids in the process water contained in the anaerobic reactor (125a, 125b, 225) is measured continuously or discontinuously, and, when the content of inorganic solids in the process water contained in the anaerobic reactor (125a, 125b, 225) exceeds a preset limit value, process water with solids dissolved and dispersed therein from the anaerobic reactor (125a, 125b, 225) is continuously supplied to a solid/liquid separating device (126a, 126b, 226) for separation into a fraction depleted in inorganic solids and a fraction enriched in inorganic solids, wherein the fraction depleted in inorganic solids is at least partially returned to the anaerobic reactor (125a, 125b, 225) and the fraction enriched in inorganic solids is discharged from the device (100) and/or the paper machine (200) until the content of inorganic solids in the process water contained in the anaerobic reactor (125a, 125b, 225) is less than the preset limit value.

2. The method according to claim 1, **characterized in that** the process water continuously supplied to the solid/liquid separating device (126a, 126b, 226) is taken from the anaerobic reactor (125a, 125b, 225) from the lower section of the anaerobic reactor (125a, 125b, 225) with respect to the height of the anaerobic reactor (125a, 125b, 225), preferably from the lower 20 %, particularly preferably from the lower 10 %, and particularly preferably from the lower 5 % of the anaerobic reactor (125a, 125b, 225).

3. The method according to one of the preceding claims, **characterized in that** the limit value for the content of inorganic solids in the process water contained in the anaerobic reactor (125a, 125b, 225) is preset to a value between 30 and 45 % by weight, preferably between 34 and 40 % by weight and particularly preferably between 36 and 38 % by weight.

4. The method according to one of the preceding claims, **characterized in that** process water from the anaerobic reactor (125a, 125b, 225) is continuously supplied to a solid/liquid separating device (126a, 126b, 226) and the fraction which is depleted of inorganic solids is returned at least partially to the anaerobic reactor (125a, 125b, 225) until the content of inorganic solids in the process water contained in the anaerobic reactor (125a, 125b, 225) is at least 1 % less, preferably at least 2 % less, particularly preferably at least 5 % less and most preferably at least 10 % less than the preset limit value.

5. The method according to one of the preceding claims, **characterized in that** the process water in the solid/liquid separating device (126a, 126b, 226) is separated in such a way that, with respect to the volume flow of the process water supplied to the solid/liquid separating device (126a, 126b, 226), the proportion of the fraction depleted in inorganic solids is at least 70 % by volume, preferably at least 80 % by volume and particularly preferably at least 90 % by volume and the proportion of the fraction enriched in inorganic solids is the remainder to 100 % by volume.

6. The method according to one of the preceding claims, **characterized in that** the process water in the solid/liquid separating device (126a, 126b, 226) is separated in such a way that the content of inorganic solids in the fraction enriched in inorganic solids is higher by at least 25 %, preferably by at least 50 %, particularly preferably by at least 75 % and most preferably by at least 100 % than the content of inorganic solids in the fraction depleted in inorganic solids.

7. The method according to one of the preceding claims, **characterized in that** the solid/liquid separating device (126a, 126b, 226) comprises one or more centrifugal separators (126a, 126b, 226) and preferably one or more cyclones (126a, 126b, 226).

8. A device for treating waste paper (100) and/or a paper machine (200) of a machine for producing paper from waste paper, in particular for carrying out a method according to one of the preceding claims, wherein the device (100) and/or the paper machine (200) comprises a process water treatment unit (116a, 116b, 216) for cleaning process water circulated in the device (100) and/or the paper machine (200), as well as at least one unit selected from one or more of a pulper (105), a sorting device (110a, 110b), a dewatering unit (115a, 115b), an oxidation/reduction unit (112), a centrifugal sorting device (202), a fine sorting device (204), a paper machine forming section (206), a paper machine pressing section (208), a reject treatment unit (118a, 118b, 212), a fiber recovery unit (214) and a drying section (210), and, wherein the process water treatment unit comprises (116a, 116b, 216):
i) an anaerobic reactor (125a, 125b, 225) comprising one or more gas separators (504) for the anaerobic cleaning of process water with at least one supply line (500) for supplying process water to be cleaned into the anaerobic reactor (125a, 125b, 225), as well as at least one discharge line (512) for discharging cleaned process water from the reactor (125a, 125b, 225), wherein the process water treatment unit (116a, 116b, 216) is connected to at least one of the at least one unit so that during the operation of the device (100) and/or paper machine (200), process water to be cleaned is supplied from at least one unit to the process water treatment unit (116a, 116b, 216) and to the anaerobic reactor (125a, 125b, 225) therein, and, after the process water treatment step, cleaned process water is returned to at least one unit, and
ii) a solid/liquid separating device (126a, 126b, 226) for the separation of process water discharged from the anaerobic reactor (125a, 125b, 225) with solids dissolved and dispersed therein into a fraction depleted in inorganic solids and a fraction enriched in inorganic solids with a discharge line (127a, 127b, 227) for the fraction enriched in inorganic solids and with a return line (128a, 128b, 228) for at least partially returning the fraction depleted of inorganic solids in the anaerobic reactor (125a, 125b, 225), wherein a further line leads from the anaerobic reactor (125a, 125b, 225) to the solid/liquid separating device (126a, 126b, 226) for the supply of process water discharged from the anaerobic reactor (125a, 125b, 225),
wherein the device for recovering waste paper (100) and/or the paper machine (200) further comprises iii) a measuring device for measuring the content of inorganic solids in the process water contained in the anaerobic reactor (125a, 125b, 225) and wherein the device also comprises a control device which can receive measurement data on the content of inorganic solids in the process water contained in the anaerobic reactor (125a, 125b, 225) and into which a limit value and optionally a threshold value can be input, wherein the control device is configured such that it automatically starts the continuous discharge of process water from the anaerobic reactor (125a, 125b, 225) and the supply thereof into the solid/liquid separating device (126a, 126b, 226) when an input limit value for the inorganic solids content in the process water in the anaerobic reactor (125a, 125b, 225) is exceeded, and automatically terminates the continuous discharge of process water from the anaerobic reactor (125a, 125b, 225) and the supply thereof into the solid/liquid separating device (126a, 126b, 226) if the limit value or an input threshold value for the inorganic solids content in the process water contained in the anaerobic reactor (125a, 125b, 225) is below the limit value or an input threshold value.

9. The device (100) and/or paper machine (200) according to claim 8, **characterized in that** the lower section of the anaerobic reactor (125a, 125b, 225), viewed in cross-section, is zigzag-shaped, wherein the zigzag-shaped region extends over 1 to 50 %, particularly preferably over 1 to 20 %, and most particularly preferably over 1 to 10 % of the height of the anaerobic reactor (125a, 125b, 225).

10. The device (100) and/or paper machine (200) according to claim 8 or 9, **characterized in that** the lower region of the anaerobic reactor (125a, 125b, 225), viewed in cross-section, is configured as a cone (514), wherein the cone (514) extends over 1 to 50 %, particularly preferably over 1 to 20 %, and most preferably over 1 to 10 % of the height of the anaerobic reactor (125a, 125b, 225).

11. The device (100) and/or paper machine (200) according to one of claims 8 to 10, **characterized in that** the solid/liquid separating device (126a, 126b, 226) comprises one or more centrifugal separators (126a, 126b, 226) and preferably one or more cyclones (126a, 126b, 226).

12. A machine for producing paper from waste paper, comprising a device for processing waste paper (100) and a paper machine (200) according to one of claims 8 to 11, **characterized in that** the device (100) comprises one, two or more stages (101a, 101b), wherein each stage (101a, 101b) comprises a dewatering unit (115a, 115b) and at least one further unit selected from one or more of a pulper (105), a sorting device (110a, 110b) and an oxidation/reduction unit (112), wherein each stage (101a, 101b) and the paper machine (200) each comprise a process water treatment unit (116a, 116b, 216) having the features relating to the process water treatment unit of one of claims 10 to 17.

13. The machine according to claim 12, **characterized in that** the paper machine (200) comprises at least one unit selected from a centrifugal sorting device (202), a fine sorting device (204), a paper machine forming section (206), a paper machine pressing section (208), a reject treatment unit (212), a fiber recovery unit (214) and a drying section (210), and preferably comprises all of these units.

## Revendications

1. Procédé d'épuration en continu de l'eau circulant dans un dispositif de traitement des vieux papiers (100) et/ou dans la machine à papier (200) d'un système de production de papier à partir de vieux papiers, dans lequel l'eau de traitement à épurer provenant d'au moins une unité du dispositif (100) et/ou de la machine à papier (200) est introduite dans une unité de traitement de l'eau via un réacteur anaérobie (125a, 125b, 225) comprenant un ou plusieurs séparateurs de gaz (504), l'eau de traitement est alors mise en contact dans le réacteur anaérobie (125a, 125b, 225) avec des micro-organismes anaérobies afin de décomposer les impuretés contenues dans l'eau de traitement, puis l'eau de traitement purifiée est évacuée du réacteur anaérobie (125a, 125b, 225) et renvoyée à au moins une unité du dispositif (100) et/ou de la machine à papier (200), au moins une unité étant sélectionnée parmi un ou plusieurs éléments, dont un pulpeur (105), un trieur (110a, 110b), une unité de drainage (115a, 115b), une unité d'oxydation/réduction (112), un trieur centrifuge (202), un dispositif de tri fin (204), une section de formage de machine à papier (206), une section de pressage de machine à papier (208), une unité de traitement des rejets (118a, 118b, 212), une unité de récupération des fibres (214) et une section de séchage (210), la teneur en matières solides inorganiques dans le réacteur anaérobie (125a, 125b, 225) étant mesurée de manière continue ou discontinue au cours du processus, de sorte que, lorsque la teneur en matières solides inorganiques dans l'eau de traitement contenue dans le réacteur anaérobie (125a, 125b, 225) dépasse une valeur limite prédéfinie, l'eau de traitement contenant des solides dissous et dispersés provenant du réacteur anaérobie (125a, 125b, 225) est amenée en continu vers un dispositif de séparation solide/liquide (126a, 126b, 226) pour la séparation en une fraction appauvrie en matières solides inorganiques et une fraction enrichie en matières solides inorganiques, la fraction appauvrie en matières solides inorganiques étant au moins partiellement renvoyée vers le réacteur anaérobie (125a, 125b, 225) et la fraction enrichie en matières solides inorganiques étant évacuée du dispositif (100) et/ou de la machine à papier (200) jusqu'à ce que la teneur en solides inorganiques dans l'eau de traitement contenue dans le réacteur anaérobie (125a, 125b, 225) soit inférieure à la valeur limite prédéfinie.

2. Procédé selon la revendication 1, **caractérisé en ce que** l'eau de traitement provenant du réacteur anaérobie (125a, 125b, 225) et amenée en continu au dispositif de séparation solide/liquide (126a, 126b, 226) soit prélevée dans la zone inférieure du réacteur anaérobie (125a, 125b, 225), de préférence dans les 20 % les plus bas, ou mieux encore dans les 10 % les plus bas, au mieux dans les 5 % les plus bas du réacteur anaérobie (125a, 125b, 225) par rapport à sa hauteur (125a, 125b, 225).

3. Procédé selon l'une quelconque des revendications précédentes, **caractérisé en ce que** la valeur limite de la teneur en solides inorganiques dans l'eau de traitement contenue dans le réacteur anaérobie (125a, 125b, 225) soit préréglée entre 30 et 45 % du poids, de préférence entre 34 et 40 %, voire au mieux entre 36 et 38 % du poids.

4. Procédé selon l'une quelconque des revendications précédentes, **caractérisé en ce que** l'eau de traitement provenant du réacteur anaérobie (125a, 125b, 225) soit amenée en continu à un dispositif de séparation solide/liquide (126a, 126b, 226) et à ce que la fraction appauvrie en matières solides inorganiques soit recyclée au moins partiellement dans le réacteur anaérobie (125a, 125b, 225) jusqu'à ce que la teneur en matières solides inorganiques dans l'eau de traitement contenue dans le réacteur anaérobie (125a, 125b, 225) soit inférieure d'au moins 1 %, voire de 2 % ou 5 %, et idéalement d'au moins 10 % en moins par rapport à la valeur limite prédéfinie.

5. Procédé selon l'une quelconque des revendications précédentes, **caractérisé en ce que** l'eau de traitement soit séparée dans le dispositif de séparation solide/liquide (126a, 126b, 226) de telle sorte que, par rapport au débit volumique de l'eau amenée au dispositif de séparation solide/liquide (126a, 126b, 226), la proportion de la fraction appauvrie en matières solides inorganiques s'élève à au moins 70 % du volume, de préférence 80 % et de manière optimale à 90 %, et à ce que la proportion de la fraction enrichie en matières solides inorganiques s'élève à 100 % du volume.

6. Procédé selon l'une quelconque des revendications précédentes, **caractérisé en ce que** l'eau de traitement soit séparée dans le dispositif de séparation solide/liquide (126a, 126b, 226), de telle sorte que la teneur en matières solides inorganiques dans la fraction enrichie en matières solides inorganiques soit d'au moins 25 %, de préférence d'au moins 50 %, voire 75 %, et de manière optimale 100 % supérieure à la teneur en matières solides inorganiques dans la fraction appauvrie en matières solides inorganiques.

7. Procédé selon l'une quelconque des revendications précédentes, **caractérisé en ce que** le dispositif de séparation solide/liquide (126a, 126b, 226) comprenne un ou plusieurs séparateurs centrifuges (126a, 126b, 226) et de préférence un ou plusieurs cyclones (126a, 126b, 226).

8. Dispositif de traitement de vieux papier (100) et/ou machine à papier (200) d'un système de production de papier à partir de vieux papier, en particulier pour la mise en œuvre d'un procédé selon l'une des revendications précédentes, dans lequel le dispositif (100) et/ou la machine à papier (200) comprend une unité de traitement de l'eau de process (116a, 116b, 216) pour la purification de l'eau circulant dans le dispositif (100) et/ou la machine à papier (200), ainsi qu'au moins une unité sélectionnée parmi un pulpeur (105), un trieur (110a, 110b), une unité de drainage (115a, 115b), une unité d'oxydation/réduction (112), un trieur centrifuge (202), un dispositif de tri fin (204), une unité de formage de machine à papier (206), une section de pressage de machine à papier (208), une unité de traitement des rejets (118a, 118b, 212), une unité de récupération des fibres (214) et une section de séchage (210), et dans lequel l'unité de traitement d'eau de processus (116a, 116b, 216) comprend :
i) un réacteur anaérobie (125a, 125b, 225) comprenant un ou plusieurs séparateurs de gaz (504) pour la purification anaérobie de l'eau de traitement, avec au moins une conduite d'alimentation (500) pour l'alimentation en eau de traitement à purifier dans le réacteur anaérobie (125a, 125b, 225), ainsi qu'au moins une conduite d'évacuation (512) pour l'évacuation de l'eau de traitement purifiée du réacteur (125a, 125b, 225), l'unité de traitement de l'eau (116a, 116b, 216) étant reliée à au moins une unité, de sorte que lors du fonctionnement du dispositif (100) et/ou de la machine à papier (200), l'eau de traitement à purifier soit acheminée à partir d'au moins une unité de traitement de l'eau (116a, 116b, 216) dans le réacteur anaérobie (125a, 125b, 225), puis après l'étape de traitement de l'eau, l'eau purifiée soit recyclée dans au moins une unité, et
ii) un dispositif de séparation solide/liquide (126a, 126b, 226) pour la séparation de l'eau de traitement évacuée du réacteur anaérobie (125a, 125b, 225) avec des solides dissous et dispersés dans celle-ci en une fraction appauvrie en solides inorganiques et une fraction enrichie en solides inorganiques, avec une conduite d'évacuation (127a, 127b, 227) pour la fraction enrichie en solides inorganiques et une conduite de recyclage (128a, 128b, 228) pour le recyclage au moins partiel de la fraction appauvrie en solides inorganiques dans le réacteur anaérobie (125a, 125b, 225), une autre conduite menant du réacteur anaérobie (125a, 125b, 225) au dispositif de séparation solide/liquide (126a, 126b, 226) pour l'alimentation en eau de traitement évacuée du réacteur anaérobie (125a, 125b, 225)
le dispositif de traitement du papier usagé (100) et/ou la machine à papier (200) comprenant en outre iii) un dispositif de mesure pour mesurer la teneur en solides inorganiques dans l'eau de traitement contenue dans le réacteur anaérobie (125a, 125b, 225), ce dernier possédant également un dispositif de commande permettant de recevoir des données de mesure sur la teneur en solides inorganiques dans l'eau de traitement contenue dans le réacteur anaérobie (125a, 125b, 225), et dans lequel une valeur limite et éventuellement une valeur seuil peuvent être entrées, le dispositif de commande étant conçu de manière à pouvoir automatiquement évacuer en continu l'eau de traitement du réacteur anaérobie (125a, 125b, 225) pour la réintroduire dans le dispositif de séparation solide/liquide (126a, 126b, 226) lorsqu'une valeur limite entrée pour la teneur en solides inorganiques dans l'eau de traitement dans le réacteur anaérobie (125a, 125b, 225) est dépassée, l'évacuation continue de l'eau de traitement du réacteur anaérobie (125a, 125b, 225) et l'alimentation de celui-ci dans le dispositif de séparation solide/liquide (126a, 126b, 226) se terminant lorsque la valeur limite ou un seuil entré pour la teneur en solides inorganiques dans l'eau de traitement contenue dans le réacteur anaérobie (125a, 125b, 225) est dépassée.

9. Dispositif (100) et/ou machine à papier (200) selon la revendication 8, **caractérisé en ce que** la zone inférieure du réacteur anaérobie (125a, 125b, 225), vue en coupe transversale, est configurée en zigzag, la zone en zigzag s'étendant sur 1 à 50 %, de préférence sur 1 à 20 %, voire mieux sur 1 à 10 % de la hauteur du réacteur anaérobie (125a, 125b, 225).

10. Dispositif (100) et/ou machine à papier (200) selon la revendication 8 ou 9, **caractérisé en ce que** la zone inférieure du réacteur anaérobie (125a, 125b, 225), vue en coupe transversale, est conçue comme un cône (514), le cône (514) s'étendant sur 1 à 50 %, de préférence sur 1 à 20 %, voire mieux sur 1 à 10 % de la hauteur du réacteur anaérobie (125a, 125b, 225).

11. Dispositif (100) et/ou machine à papier (200) selon l'une quelconque des revendications 8 à 10, **caractérisé en ce que** le dispositif de séparation solide/liquide (126a, 126b, 226) comprend un ou plusieurs séparateurs centrifuges (126a, 126b, 226) et de préférence un ou plusieurs cyclones (126a, 126b, 226).

12. Machine de fabrication de papier à partir de vieux papiers comprenant un dispositif de traitement de vieux papiers (100) et une machine à papier (200) selon l'une quelconque des revendications 8 à 11, **caractérisée en ce que** le dispositif (100) comprend un, deux ou plusieurs étages (101a, 101b), chaque étage (101a, 101b) comprenant une unité de drainage (115a, 115b) et au moins un autre ensemble choisi parmi un ou plusieurs pulpeurs (105), un trieur (110a, 110b) et une unité d'oxydation/réduction (112), chaque étage (101a, 101b) et la machine à papier (200) comprenant chacun une unité de traitement d'eau de traitement (116a, 116b, 216) ayant les caractéristiques de l'une quelconque des revendications 10 à 17 concernant l'unité de traitement d'eau.

13. Machine selon la revendication 12, **caractérisée en ce que** la machine à papier (200) comprend au moins une unité choisie parmi un trieur centrifuge (202), un dispositif de tri fin (204), une unité de formage de machine à papier (206), une section de pressage de machine à papier (208), une unité de traitement des rejets (212), une unité de récupération des fibres (214) et une partie de séchage (210), de préférence toutes.
